(19) Europäisches Patentamt
European Patent Office
Office européen des brevets

(11) **EP 1 821 092 B1**

(12) **EUROPEAN PATENT SPECIFICATION**

(45) Date of publication and mention
of the grant of the patent:
**26.06.2013 Bulletin 2013/26**

(51) Int Cl.:
***G01M 11/00*** (2006.01)    ***G02B 27/10*** (2006.01)
***G01M 11/02*** (2006.01)    ***G02B 27/14*** (2006.01)

(21) Application number: **05806970.9**

(22) Date of filing: **17.11.2005**

(86) International application number:
**PCT/JP2005/021129**

(87) International publication number:
**WO 2006/054648 (26.05.2006 Gazette 2006/21)**

(54) **METHOD AND DEVICE FOR EVALUATING PRISM UNIT AND METHOD OF MANUFACTURING PRISM UNIT**

VERFAHREN UND EINRICHTUNG ZUR EVALUIERUNG EINER PRISMAEINHEIT UND VERFAHREN ZUR HERSTELLUNG EINER PRISMAEINHEIT

PROCÉDÉ ET DISPOSITIF D'ÉVALUATION D'UNE UNITÉ PRISMATIQUE ET PROCÉDÉ DE FABRICATION D'UNE UNITÉ PRISMATIQUE

(84) Designated Contracting States:
**BE CZ DE**

(30) Priority: **19.11.2004 JP 2004336487**

(43) Date of publication of application:
**22.08.2007 Bulletin 2007/34**

(73) Proprietor: **Konica Minolta, Inc.**
**Tokyo 100-7015 (JP)**

(72) Inventors:
• **SAWAMURA, Shigeru**
**Hachioji-shi,**
**Tokyo 1928505 (JP)**

• **TERADA, Masahiro**
**Hachioji-shi,**
**Tokyo 1928505 (JP)**
• **KAWAI, Toshiyuki**
**Hachioji-shi,**
**Tokyo 1928505 (JP)**

(74) Representative: **HOFFMANN EITLE**
**Patent- und Rechtsanwälte**
**Arabellastrasse 4**
**81925 München (DE)**

(56) References cited:
**JP-A- 2000 258 725    JP-A- 2004 170 949**
**US-A1- 2003 048 423    US-A1- 2004 085 518**
**US-B1- 6 452 627**

EP 1 821 092 B1

**Description**

TECHNICAL FIELD

The present invention relates to a method and a device for evaluating a prism unit composed of a plural number of prisms and to be used for a projector, and a method for producing the prism unit.

BACKGROUND ART

In recent years, high-performance projectors have been demanded for high-quality video/audio sets with large screens. In a projector of this kind, a prism unit is a very important factor of picture quality, and therefore, it is necessary to evaluate the performance of the prism unit quantitatively.

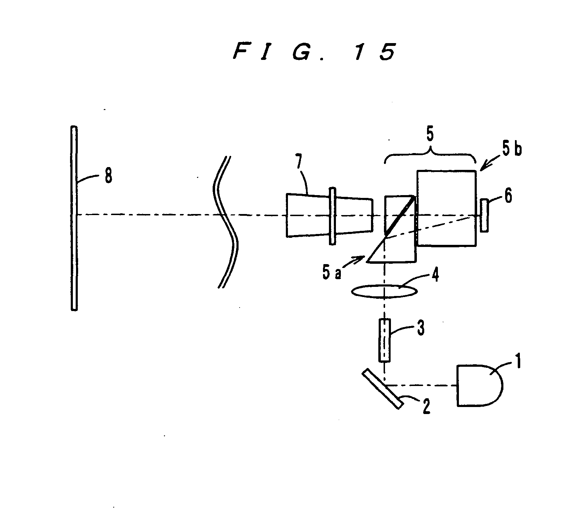

Fig. 15 shows a conventional projector schematically. This projector comprises a lamp 1 which is a light source, a mirror 2, a converging integral rod 3, a collimator lens 4, a prism unit 5, a light modulator 6, such as a liquid crystal modulator, a digital micro mirror or the like, and a projection lens 7. The projector projects a light beam modulated by the light modulator 6 on a screen 8. The prism unit 5 comprises an input/output separation prism unit 5a and a color separation/composite prism unit 5b.

Evaluation of the prism unit 5 has been conventionally performed in the following way: the prism unit 5 is installed in the projector; an image of an evaluation chart is projected on the screen 8; and the projected image is visually inspected or taken into a CCD image sensor. In the evaluating method, however, it is necessary to assemble the projector, and a large space is necessary for the evaluation. Evaluation of the prism unit only with itself has been demanded, but no such method has been established yet.

Regarding a prism unit for a projector, the patent document 1 listed below teaches that when an image light passes through an air gap of a critical angle prism between a light modulator and a projection lens, astigmatism occurs, which degrades the quality of a projected image. In order to prevent this problem, the patent document 1 adopts such a structure to inhibit the image light from passing through an air gap. In the prism unit of the structure, however, a projection optical path is long, and accordingly, the prism unit and the projection lens must be large. This results in a large projector, which is not desired.

From another aspect, an air gap between prism surfaces is necessary to achieve entire reflection between the prism surfaces. Therefore, the patent document 2 listed below suggests that an air gap between prism surfaces be made in the shape of a wedge so as to prevent the air gap from causing astigmatism. However, it is difficult to form the air gap into the shape of a wedge exactly as designed.

Patent Document 1:

Japanese Patent Laid-Open Publication No. 2003-262918 Patent Document 2:
Japanese Patent Laid-Open Publication No. 2002-49094

US 2003/0 048 423 A1 discloses an LCD projection system using reflective LCD imager units with one or more polarization beam splitters to separate the light incident on the imager from the light reflected by one or more respective imagers. This document aims at reducing the astigmatism being introduced by the beam.

US 2004/0 085 518 A1 refers to a color-separating and - recombining optical system provided between a light source and a projection lens in a projection display. It comprises at least one prism assembly made up of at least two prisms bonded to each other with a bonding layer formed between the prisms. A white light emitted from the light source is divided into red-, green- and blue-color light components related to primary colors. The light components are modulated by spatial light modulators in accordance with a video signal. The modulated light components are combined and projected onto a screen via the projection lens. The thickness of the bonding layer is varied as thin and thick for optical paths long and short, respectively, from the spatial light modulators to the bonding layer which each modulated light component emitted from the corresponding spatial light modulator reaches.

US 6 452 627 B1 describes a calibrating system of a display characteristic measurement apparatus including a calibration pattern display unit for displaying a calibration pattern at substantially the same luminescence characteristic as that of a display apparatus to be measured. The system further comprises an image pickup unit provided in the display characteristic measurement apparatus for picking up a calibration pattern displayed on the display apparatus to generate image data, and a calculator for calculating, based on the generated image data, calibration data for the display characteristic measurement apparatus.

JP 2000-258 725 A discloses a projection optical system capable of preventing the temperature rise of a display element and its peripheral equipment, by preventing returning light, and obtaining a desired projection image.

DISCLOSURE OF THE INVENTION

Objects of the Invention

An object of the present invention is to provide a method and a device for evaluating a prism unit with an air gap only with the prism unit, and more particularly a method and a device for evaluating influence of the air gap on the optical performance of the prism unit especially by measuring an astigmatic difference, and a production method of the prism unit.

Means of Attaining the Objects

In order to attain the object, a first aspect of the present invention relates to a method for evaluating a prism unit comprising a color separation/composition prism unit with an air gap formed between air gap surfaces tilting against an optical axis, said color separation/composition prism unit separating a white light beam into a first color beam, a second color beam and a third color beam, composing reflected beams of the separated color beams into a composite beam and emitting the composite beam. The method comprises a step of evaluating a performance of the prism unit based on a first astigmatic difference of the first color beam, a second astigmatic difference of the second color beam and a third astigmatic difference of the third color beam.

The method according to the first aspect of the present invention permits evaluation of a prism unit comprising a color separation/composition prism unit with a plural number of air gaps, each of which is formed between air gap surfaces tilting against an optical axis, with the prism unit itself, by quantitatively measuring an astigmatic difference caused by the prism unit. In the method, concurrently, an MTF (modulation transfer function) can be measured and evaluated.

In the method according to the first aspect of the present invention, the color separation/composition prism unit may further comprise a fourth prism which is located opposite a first surface of a first prism such that an air gap is formed between the fourth prism and the first surface. In this case, also, only with the prism unit itself, quantitative measurement of an astigmatic difference caused by the prism unit is possible.

A second aspect of the present invention relates to a method for evaluating a prism unit comprising an input/output separation prism unit for separating an illuminating light beam and a projecting light beam from each other and a color separation/composition prism unit for separating a white illuminating light beam into a first color beam, a second color beam and a third color beam, composing reflected beams of the separated color beams into a composite beam and emitting the composite beam. The input/output separation prism unit comprises a first air gap formed between first air gap surfaces tilting against an optical axis, and the color separation/composition prism unit comprises a plural number of air gaps, each of which is formed between air gap surfaces tilting against the optical axis, and the method comprises a step of evaluating a performance of the prism unit based on a first astigmatic difference of the first color beam, a second astigmatic difference of the second color beam and a third astigmatic difference of the third color beam.

The second aspect of the present invention relates to a method for evaluating a prism unit which is a combination of an input/output separation prism unit and a color separation/composition prism unit. The method according to the second aspect of the present invention permits evaluation of such a prism unit only with the prism unit itself by quantitatively measuring an astigmatic difference caused by the prism unit. In the method, the evaluation is performed based on astigmatic differences of the first color beam, the second color beam and the third color beam, and evaluation can be made in more details, such as with regard to the accuracy of the respective surfaces and the respective air gaps of the prism unit. In the method, concurrently, an MTF can be measured and evaluated.

In the methods according to the first and the second aspects of the present invention, preferably, in the evaluating step, a first chart having a pattern in the first direction and a second chart having a pattern in the second direction are imaged by an optical system via one of the prism unit, the input/output separation prism unit and the color separation/composition prism unit, and an astigmatic difference is figured out from a difference between an image point of the first chart and an image point of the second chart. Thereby, more accurate measurement of an astigmatic difference becomes possible.

In this case, specifically, in the evaluating step, data of first chart images and data of second chart images formed by the optical system are collected with an image pick-up unit while a position of the optical system and a position of the image pick-up unit in a direction of the optical axis are changed in relative to each other. Then, an image point in the first direction and an image point in the second direction are figured out based on spatial frequency data in the first direction transformed from the data of the first chart images and spatial frequency data in the second direction transformed from the data of the second chart images, and a difference between the image point in the first direction and the image point in the second direction is measured as the astigmatic difference.

In the method, further, the evaluation may be based on an MTF calculated from the data of the first chart images and an MTF calculated from the data of the second chart images.

In the method, preferably, the first chart has a frequency in the first direction, and the second chart has a frequency in the second direction. In the method, preferably, the prism unit, the input/output separation prism unit or the color separation/composition prism unit is used to project a light beam modulated by a light modulator, and the first chart and the second chart have such frequencies that the first chart image on the image point and the second chart image on the image point have frequencies from one to four times a Nyquist frequency determined by a pixel frequency of the light modulator.

In the method, the image point of the first chart in the direction of the optical axis and the image point of the second chart in the direction of the optical axis can be figured out based on contrasts of first chart images and contrasts of second chart images. In this case, specifically, data of first chart images and data of second chart images formed by the optical system are collected with an image pick-up unit while a position of the optical system and a position of the image pick-up unit in a direction of the optical axis are changed in relative to each other. Then, the image point in the first direction and the image point in the second direction are figured out from contrast values in the first direction calculated from the data of the first chart images and contrast values in the second direction calculated from the data of the second chart images respectively, and a difference between the image point in the first direction and the image point in the second direction is measured as the astigmatic difference.

A third aspect of the present invention relates to a device for evaluating a prism unit comprising a color separation/composition prism unit with an air gap formed between air gap surfaces tilting against an optical axis, said color separation/composition prism unit separating a white light beam into a first color beam, a second color beam and a third color beam, composing reflected beams of the separated color beams into a composite beam and emitting the composite beam. The device comprises a light source; an evaluation chart; an optical system for directing a light beam which is emitted from the light source and which passes through the evaluation chart to the prism unit; a plural number of image pick-up units for detecting images formed by the respective color beams which passed through the prism unit; and a mechanism for moving the image pick-up units along respective optical axes of the color beams including image points of the color beams.

The device according to the third aspect of the present invention permits evaluation of a prism unit comprising a color separation/composition prism unit only with the prism unit by quantitatively measuring an astigmatic difference caused by the prism unit. In the device, concurrently, an MTF can be measured and evaluated.

In the device according to the third aspect of the present invention, as a simple structure for detecting images, each of the image pick-up units may be composed of an objection lens and a light distribution detector, for example, a CCD image sensor. Also, the evaluation chart preferably comprises a first chart with a frequency in a first direction which is orthogonal to a plane formed by the optical axis and normal lines of the air gap surfaces crossing the optical axis, and a second chart with a frequency in a second direction which is orthogonal to the first direction and the optical axis.

A fourth aspect of the present invention relates to a method for producing a prism unit, an input/output separation prism unit or a color separation/composition prism unit, and the production method comprises a step of carrying out the evaluating method according to one of the first aspect, the second aspect and the third aspects of the present invention. Thereby, a prism unit, an input/output separation prism unit or a color separation/composition prism unit with a desired performance can be produced.

A fifth aspect of the present invention relates to a method for producing a prism unit. The method comprises: a first measuring step of measuring an astigmatic difference caused by an input/output separation prism unit with an air gap formed between air gap surfaces tilting against an optical axis, the input/output separation prism unit separating an illuminating light beam and a projecting light beam from each other; a second measuring step of measuring astigmatic differences caused by a color separation/composition prism unit with an air gap formed between air gap surfaces tilting against an optical axis, said color separation/composition prism unit separating a white light beam into a first color beam, a second color beam and a third color beam, composing reflected beams of the separated color beams into a composite beam and emitting the composite beam, the astigmatic differences being a first astigmatic difference of the first color beam, a second astigmatic difference of the second color beam and a third astigmatic difference of the third color beam; and a step of combining an input/output separation prism unit which was subjected to the first measuring step with a color separation/composition prism unit which was subjected to the second measuring step such that a combined astigmatic difference is within a specified range.

In the production method according to the fifth aspect of the present invention, before a stage of assembly to combine an input/output separation prism unit and a color separation/composition prism unit with each other, the units were already subjected to evaluation, and at the assembly stage, an input/output separation prism unit and a color separation/composition prism unit are combined with each other such that a combined astigmatic difference will be within a specified range. Thus, at the assembly stage, the performances of the respective prism units are known, and the yields of the respective prism units are improved.

In the paragraphs and in the claims below, air gap surfaces mean virtual surfaces which are parallel to prism surfaces and which form an air gap in-between.

A sixth aspect of the present invention relates to a device for evaluating a prism unit comprising a plural number of prisms with an air gap formed between air gap surfaces tilting against an optical axis. The device comprises a light source; an evaluation chart; an optical system for directing a light beam which is emitted from the light source and which passes through the evaluation chart to the prism unit; and an image pick-up unit for detecting an image formed by the light which passed through the prism unit. In the device, the image pick-up unit is movable along an optical axis including an image point of the light beam.

The device according to the sixth aspect of the present invention permits quantitative measurement of an astigmatic difference of a prism unit with an air gap only with the prism unit itself without installing the prism unit in a projector. In the device, concurrently, an MTF can be measured and evaluated.

In the device according to the sixth aspect of the present invention, as a simple structure for detecting a light image, the image pick-up unit may be composed of an objection lens and a light distribution detector, for example, a CCD image sensor. Also, the evaluation chart preferably comprises a first chart with a frequency in a first direction which is orthogonal to a plane formed by the optical axis and normal lines of the air gap surfaces crossing the optical axis, and a second chart with a frequency in a second direction which is orthogonal to the first direction and the optical axis.

A seventh aspect of the present invention relates to a method for producing a prism unit, an input/output separation prism unit or a color separation/composition prism unit, and the production method comprises a step of carrying out the evaluating method according to one of the first aspect to the fifth aspect of the present invention. Thereby, a prism unit, an input/output separation prism unit or a color separation/composition prism unit with a desired performance can be produced.

An eighth aspect of the present invention relates to a method for producing a prism unit, and the production method comprises a step of combining an input/output separation prism unit evaluated by the method according to the third aspect of the present invention with a color separation/composition prism unit evaluated by the method according to the fourth aspect of the present invention such that a combined astigmatic difference is within a specified range.

In the production method according to the eighth aspect of the present invention, before a stage of assembly to combine an input/output separation prism unit and a color separation/composition prism unit with each other, the units were already subjected to evaluation, and at the assembly stage, an input/output separation prism unit and a color separation/composition prism unit are combined with each other such that a combined astigmatic difference will be within a specified range. Thus, at the assembly stage, the performances of the respective prism units are known, and the yields of the respective prism units are improved.

In the paragraphs and in the claims below, air gap surfaces mean virtual surfaces which are parallel to prism surfaces and which form an air gap in-between.

BRIEF DESCRIPTION OF THE DRAWINGS

Fig. 1 is a schematic view of an evaluating device according to a first embodiment of the present invention.
Fig. 2 shows a prism unit of a five-piece type which is to be evaluated by a method according to the present invention, (A) being a plan view and (B) being a front view.
Fig. 3 shows an evaluation chart, (A) being an illustration of the evaluation chart, (B) being a chart showing a signal waveform in X direction and (C) being a chart showing a signal waveform in Y direction.
Fig. 4 is a graph showing an astigmatic difference and MTFs.
Fig. 5 is a chart showing a positional relationship among image points of color beams emergent from the prism unit shown by Fig. 2.
Fig. 6 shows a prism unit of a six-piece type, (A) being a plan view and (B) being a front view.
Fig. 7 is a chart showing a positional relationship among image points of color beams emergent from the prism unit shown by Fig. 6.
Fig. 8 is a schematic view of an evaluating device according to a second embodiment of the present invention.
Fig. 9 is a graph showing astigmatic differences and MTFs of three color beams.
Fig. 10 is an illustration of various charts used for an evaluating method according to the present invention.
Fig. 11 is a schematic view of an evaluating device using a three-dimensional chart.
Fig. 12 is a schematic view of an evaluating device using a zone plate.
Fig. 13 is an illustration of the zone plate.
Fig. 14 is an illustration of a part of an optical path and an image of the zone plate.
Fig. 15 is a schematic view of a projector.

BEST MODES FOR CARRYING OUT THE INVENTION

Embodiments of a method and a device for evaluating a prism unit according to the present invention and embodiments of a production method of the prism unit are described.

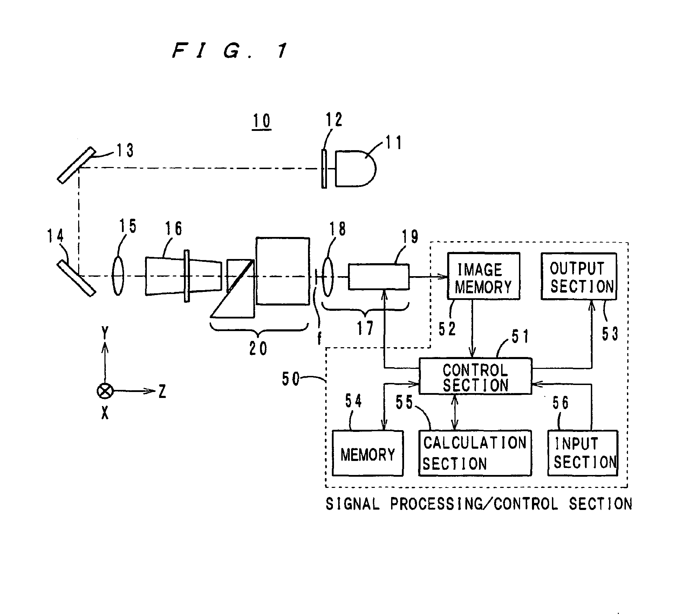

Evaluating Device According to a First Embodiment; See Fig. 1

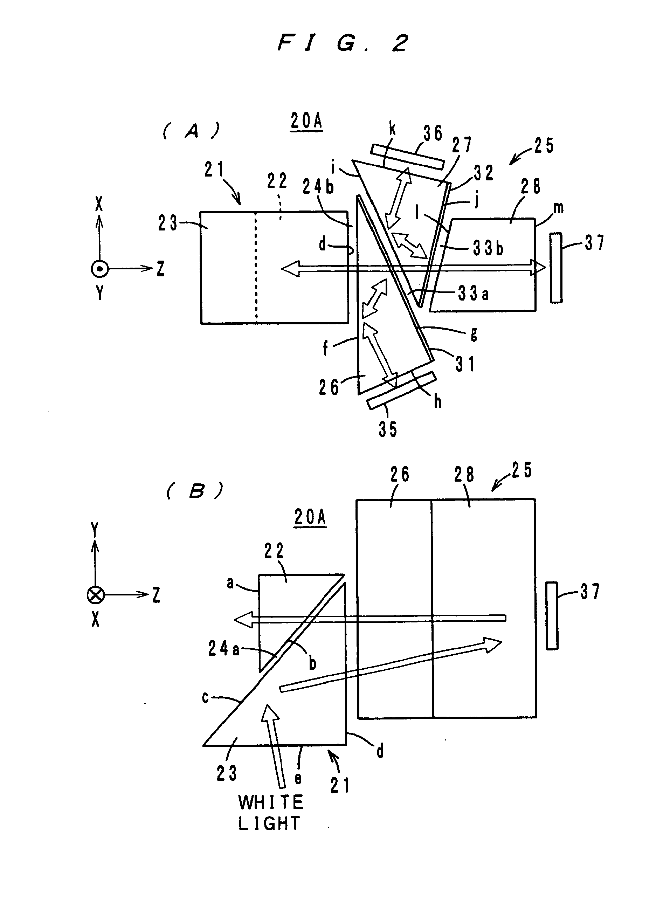

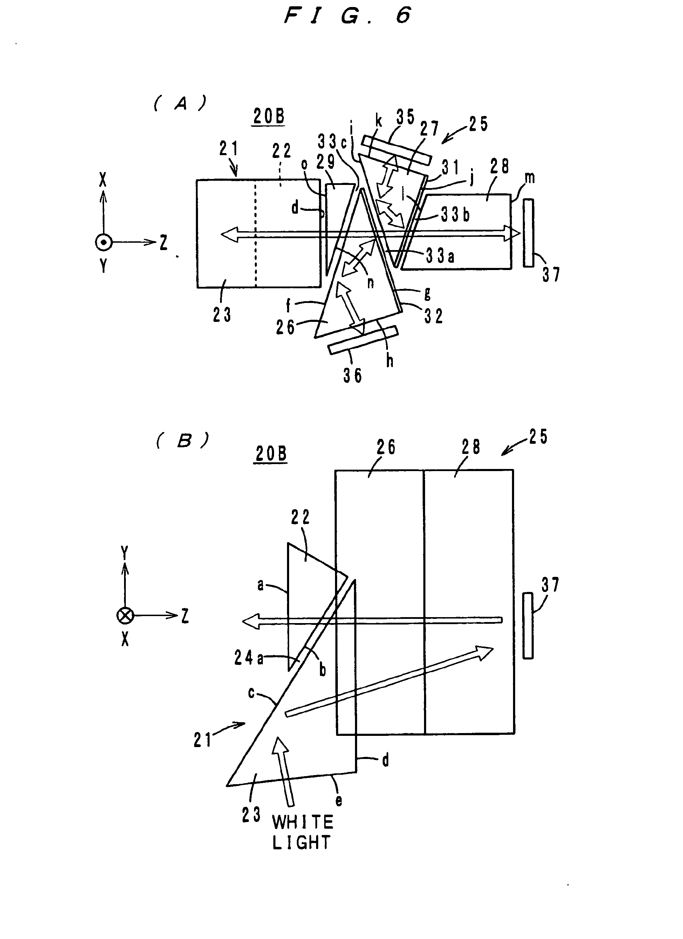

First, referring to Fig. 1, a device for evaluating a prism unit according to a first embodiment is described. In the embodiments below, a five-piece type prism unit 20A (see Fig. 2) and a six-piece type prism unit 20B (see Fig. 6) are evaluated.

The evaluating device 10 comprises a lamp 11 which is a white light source, an evaluation chart 12, diverting mirrors 13 and 14, a collimator lens 15, a master lens 16 and an image pick-up unit 17. A prism unit 20 to be evaluated is set between the master lens 16 and the image pick-up unit 17. The collimator lens 15 transforms light which has passed through the evaluation chart 12 into a substantially parallel bundle of rays. Then, the master lens 16 converges the parallel bundle of rays and forms a reduced image of the evaluation chart 12 on a focal point f on an optical axis. The master lens 16 is preferably a lens with aberrations sufficiently corrected. The focal length of the collimator lens 15 is preferably ten times or more the focal length of the master lens 16. In the first embodiment, a projection lens is used together with the prism unit 20 to project the image.

The image pick-up unit 17 comprises an objection lens 18 and a two-dimensional image sensor 19 (for example, a CCD), which is an element for measuring light distribution, integrated together. The image pick-up unit 17 is movable along the optical axis including the focal point f so as to observe the reduced image. More specifically, while moving the focal point of the objection lens 18 along the optical axis, the image pick-up unit 17 picks up reduced images of the chart 12. Then, based on the contrasts of the images, an astigmatic difference and an MTF of the prism unit 20 are figured out. The pattern of the chart 12, the measurement of the astigmatic difference and the evaluation of the prism unit 20 will be described later.

Further, a signal processing/control section 50 is connected to the image pick-up unit 17. Thereby, in response to a command from a control section 51, the image pick-up unit 17 picks up reduced images of the chart 12 while moving along the optical axis. Image data of the chart 12 collected by the image pick-up unit 17 are stored in an image memory 52. The image data stored in the image memory 52 are sent to a calculation section 55 to be subjected to specified processing, and the resultants are stored in a memory 54. An output section 53 displays the chart images picked up by the unit 17 and the calculation results stored in the memory 54 on a monitor. An input section 56 is an interface which receives a command, such as a measurement start command, from an operator and which sends the command to the control section 51.

Structure of a First Exemplary Prism Unit; See Fig. 2

A first exemplary prism unit 20A to be evaluated, as shown by Fig. 2, is a combination of an input/output separation prism unit 21 and a color separation/composition prism unit 25, and is of a five-piece type. The input/output separation prism unit 21 comprises a first prism 22 and a second prism 23. The color separation/composition prism unit 25 comprises a third prism 26, a fourth prism 27 and a fifth prism 28.

The first prism 22 has a first surface "a" and a second surface "b" which are at an acute angle to each other. The second prism 23 has a third surface "c" and a fourth surface "d" which are at an acute angle to each other. The second prism further has a fifth surface "e" which receives and transmits a white light beam incident thereto. The first surface "a" and the fourth surface "d" are parallel to each other. The second surface "b" and the third surface "c" are air gap surfaces which are at a small distance from each other to form an air gap 24a in-between. The normal lines of the surfaces "b" and "c", which form the air gap 24a, are parallel to a YZ plane.

The third prism 26 has a sixth surface "f" which transmits a white light beam incident thereto and a seventh surface "g" with a blue light reflecting dichroic film 31. The third prism 26 further has an eighth surface "h" which transmits a blue light beam emergent therefrom and which receives and transmits a reflected light beam of the blue light beam which has exited therefrom. The fourth prism 27 has a ninth surface "i" which transmits a red light beam and a green light beam incident thereto and a tenth surface "j" with a red light reflecting dichroic film 32. The fourth prism 27 further has an eleventh surface "k" which transmits a red light beam emergent therefrom and which receives and transmits a reflected light beam of the red light beam which has exited therefrom. The fifth prism 28 has a twelfth surface "1" which transmits a green light beam incident thereto and a thirteenth surface "m" which transmits the green light beam emergent therefrom and which receives and transmits a reflected light beam of the green light beam which has exited therefrom.

The sixth surface "f" and the thirteenth surface "m" are parallel to each other. The seventh surface "g" and the ninth surface "i" are air gap surfaces which are at a small distance from each other to form an air gap 33a in-between. The tenth surface "j" and the twelfth surface "1" are air gap surfaces which are at a small distance from each other to form an air gap 33b in-between. The normal lines of the surfaces "g" and "i", which form the air gap 33a, and the normal lines of the surfaces "j" and "1", which form the air gap 33b, are parallel to an XZ plane.

The fourth surface "d" of the second prism 23 and the fifth surface "f" of the third prism 26 are parallel to each other with an air gap 24b in-between. The input/output separation prism unit 21 and the color separation/composition prism unit 25 are held by a holder (not shown) and integrated together.

When this prism unit 20A is incorporated in a projector, a blue light modulator 35, a red light modulator 36 and a green light modulator 37 are located on the respective focal points of the surfaces "h", "k" and "m". These light modulators 35, 36 and 37 are liquid crystal modulators, digital micromirrors or the like.

When an image is projected, a white light beam to illuminate the prism unit 20A enters into the prism 23 through the surface "e" and is entirely reflected by the surface "c". Thereafter, the white light beam passes through the surface "d", crosses the air gap 24b and enters into the prism 26 through the surface "f". Then, the light beam reaches the surface "g". Then, in the white light beam, only a blue component is reflected by the dichroic film 31, and a red component and a green component pass through the dichroic film 31.

The blue light beam reflected by the dichroic film 31 is incident to the surface "f" at an angle beyond a critical angle and is entirely reflected. Then, the blue light beam passes through the surface "h" and reaches the light modulator 35, by which the blue light beam is modulated and reflected vertically.

The red light beam and the green light beam pass through the dichroic film 31, cross the air gap 33a and enter into the prism 27 through the surface "i". Then, the red light beam and the green light beam reach the surface "j". The red light beam is reflected by the dichroic film 32, and the green light beam passes through the dichroic film 32.

The red light beam reflected by the dichroic film 32 is incident to the surface "i" at an angle beyond a critical angle and is entirely reflected. Then, the red light beam passes through the surface "k" and reaches the light modulator 36, by which the red light beam is modulated and reflected vertically.

The green light beam passes through the dichroic film 32, crosses the air gap 32b and enters into the prim 28 through the surface "1". Then, the green light beam passes through the surface "m" and reaches the light modulator 37, by which the green light beam is modulated and reflected vertically.

The image light beams reflected by the light modulators 35, 36 and 37 return in the respective ways and enter into the prism 23 through the surface "d". In the meantime, the red light beam and the green light beam are composed together by the dichroic film 32, and further the blue light beam is composed by the dichroic film 31. The composite image light beam, after entering into the prism 23, passes through the surface "c" and crosses the air gap 24a. Then, the image light beam passes through the prism 22. Finally, as Fig. 15 shows, the image light beam is projected on the screen 8 via the projection lens 7.

Now, designed values of the prism unit 20A are shown as an example. The values are shown sequentially from the light source side. Regarding the input/output separation prism unit 21, the prism thickness is 28mm (14mm + 14mm in a Z direction), the air gap 24a between the surfaces "b" and "c" is 7.5 $\mu$ m, and the normal lines of the air gap surfaces "b" and "c" are at an angle of 33 degrees to the optical axis. Regarding the color separation/composition prism unit 25, the prism thickness is 57mm (11mm + 13mm + 33mm in the Z direction), the air gap 33a between the surfaces "g" and "i" is 25 $\mu$m, and the air gap 33b between the surfaces "j" and "1" is 12.5 $\mu$m. The normal lines of the air gap surfaces "g" and "i" are at an angle of 28.5 degrees to the optical axis, and the normal lines of the air gap surfaces "j" and "l" are at an angle of 11 degrees to the optical axis.

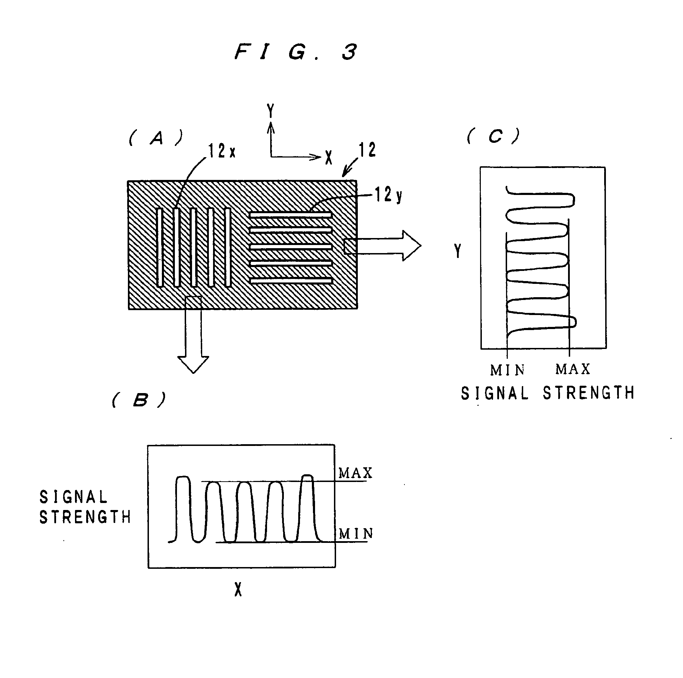

Evaluating Method According to First Embodiment; See Figs. 3-5

Next, a method for evaluating the prism unit 20A according to the first embodiment is described. The evaluation is performed by use of the evaluating device 10 shown by Fig. 1, and an astigmatic difference and an MTF (modulation transfer function) are examined. The prism unit 20A entirely can be evaluated, and also, the input/output separation prism unit 21 and the color separation/composition prism unit 25 can be evaluated separately. In a case in which the units 21 and 25 are evaluated separately, master prism units without air gaps are used. When one of the prism units 21 and 25 is evaluated, a master prism unit without an air gap is used as the other prism unit. The master prism units are parallel plates which are made of the same materials and have the same prism thicknesses as the prism units 21 and 25 respectively.

First, measurement of an astigmatic difference is described. The astigmatic difference is measured to be a difference between an image point in a first direction which is orthogonal to a plane formed by an optical axis and the normal lines of the air gap surfaces crossing the optical axis and an image point in a second direction which is orthogonal to the first direction and the optical axis. Here, an arbitrary axis which is parallel to the optical axis of the master lens 16 and which passes through the prism is called an optical axis of the prism.

More specifically, referring to Fig. 2(B) showing the input/output separation prism unit 21, the optical axis is a straight line parallel to the Z axis, and the plane formed by the optical axis and the normal lines of the air gap surfaces "b" and "c" crossing the optical axis is the YZ plane. The first direction orthogonal to the YZ plane is the direction X, and the second direction orthogonal to the first direction X and the optical axis is the direction Y.

The astigmatic difference between an image point in the first direction X and an image point in the second direction Y is measured. Fig. 3 (A) shows an evaluation chart 12 used here. The chart 12 comprises a first chart 12x composed of slits periodically formed in the X direction and a second chart 12y composed of slits periodically formed in the Y direction. As Fig. 1 shows, this chart 12 is placed in front of the lamp 11 (on a focal plane of the collimator lens 15), and the prism unit to be evaluated is placed between the master lens 16 and the objection lens 18. Then, white light is emitted from the lamp 11, and based on contrasts of images of the chart 12, the astigmatic difference between an image point in the X direction and an image point in the Y direction is measured. In the chart 12 shown by Fig. 3(A), the hatched portion is a shading portion, and blank vertical lines and blank horizontal lines are light transmitting portions.

Preferably, the first chart 12x and the second chart 12y are of a periodic structure with a spatial frequency which appears on the image surface of the master lens 16 to be one to four times the Nyquist frequency determined by the pixel frequency of the light modulator. If the frequency of the charts 12x and 12y is under the lower limit, values measured as MTF values will be so high that there are no significant differences among peaks of the MTF. If the frequency of the charts 12x and 12y is beyond the upper limit, values measured as MTF values will be so low that peaks of the MTF cannot be recognized. In this embodiment, the pixel frequency (pixel pitch) of the light modulators 35, 36 and 37 is 13.7 $\mu$m, and the spatial frequency of the charts 12x and 12y are preferably within a range from 36.5 line pairs/mm to 146 line pairs/mm. (The unit, line pairs/mm is hereinafter denoted by 1p/mm.) A chart used in this embodiment is imaged on the image surface to have a special frequency of 901p/mm. The spatial frequency of this chart is 2.5 times the Nyquist frequency determined by the pixel frequency.

A method for measuring the astigmatic difference of the prism unit 20A is hereinafter described in detail. First, an instrumental constant of the evaluating device 10 is calculated. More specifically, deterioration of an image of the chart 12 caused by the diverting mirrors 13 and 14, the collimator lens 15, the master lens 16, the objection lens 18 and the two-dimensional image sensor 19 is measured.

Referring to Fig. 1, the prism unit 20 is replaced with a master prism unit which is a parallel plate with the same thickness (85mm) as the prism unit 20. The master prism unit is placed such that an entering surface of the master prism unit is orthogonal to the optical axis of the master lens 16.

The image pick-up unit 17 picks up chart images at specified uniform intervals (1 $\mu$m in this embodiment) while moving along the optical axis. From the data of chart images picked up by the unit 17, an image point of the chart 12 is found out. Figs. 3(B) shows a signal obtained by the two-dimensional image sensor 19 representing a section of a chart image in the X direction, and Fig. 3(C) shows a signal obtained by the two-dimensional image sensor 19 representing a section of a chart image in the Y direction. In each waveform of the signals, the signal strength MAX of the light transmitting portion of the chart 12 is represented by an average MAXave of the signal strengths of the central three lines, and the signal strength MIN of the shading portion of the chart 12 is represented by an average MINave of the signal strength of the central two lines. The contrast is defined as follows:

$$\text{Contrast} = \frac{\text{MAXave} - \text{MINave}}{\text{MAXave} + \text{MINave} - 2 \times \text{OFFSET}} \quad \cdots \ (1)$$

Here, "OFFSET" means a signal value caused by thermal noise and the conditions of the image sensor 19 even while the image sensor receives no image light.

By using the expression (1), contrasts of the images taken at respective positions are calculated. From the relationship between the contrast and the image pick-up position, a position where an image with the highest contrast can be obtained is presumed and is designated as a reference position. The contrast obtained at the reference position is designated as the instrumental constant of the evaluating device 10. Images of the chart 12 are viewed from positions on the optical axis of the master lens 16, and there are no differences in the contrast and the image point between the X direction and the Y direction.

Next, the prism unit 20 is evaluated. The master prism unit is replaced with the prism unit 20, and the prism unit 20 is set as shown in Fig. 1. A fitting reference, which is usually used for fitting of the prism unit 20 into a projector, is used also for fitting of the prism unit 20 into the evaluating device 10.

The image pick-up unit 17 picks up chart images at specified uniform intervals (1 $\mu$m in this embodiment) while moving along the optical axis. From data of the chart images picked up by the unit 17, the contrast of the chart 12x and the contrast of the chart 12y at each pick-up position are calculated from the expression (1). The contrast values at respective pick-up positions are standardized by the instrumental constant of the evaluating device 10, and these standardized values are used for MTFs of the prism unit 20. An MTF is a function with regard to positions Z in the direction of optical axis, and in the following, this function is sometimes denoted by MTF(Z). The MTF obtained here shows a characteristic of the prism unit 20 with regard to the spatial frequency of the chart 12.

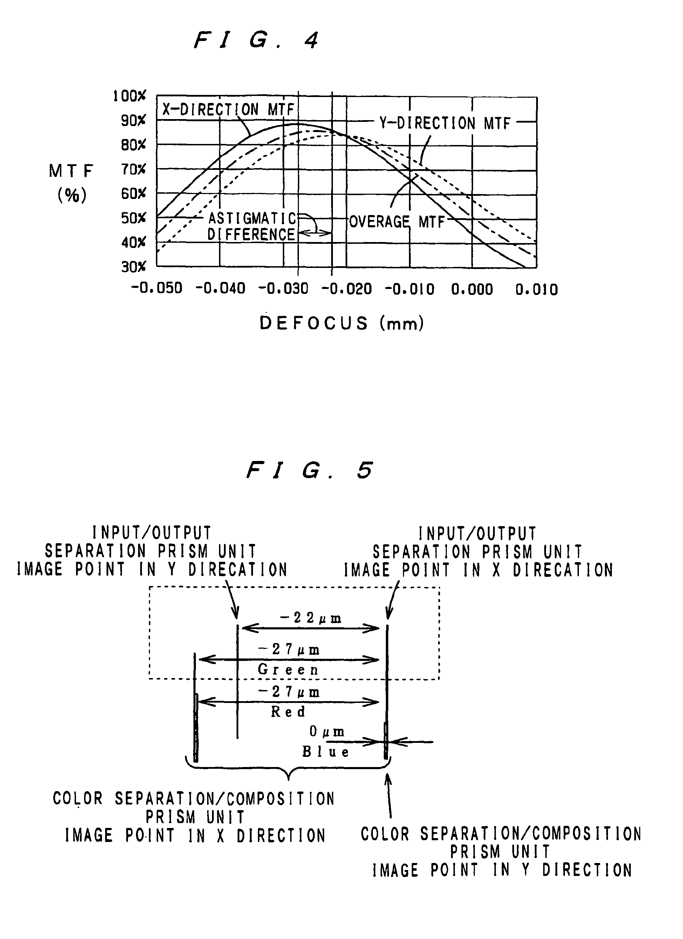

In Fig. 4, positions (Z) in the direction of optical axis are plotted in the axis of abscissa, and values of an X-direction MTF and values of a Y-direction MTF at the respective positions (Z) are plotted in the axis of ordinate. Thereby, an X-direction MTF curve and a Y-direction MTF curve are obtained. From the shapes of the MTF curves, the positions in the direction of optical axis where the maximum MTF values are obtained are figured out as the image point of the chart 12x and the image point of the chart 12y respectively. Then, a difference between the image point of the chart 12x and the image point of the chart 12y is calculated as an astigmatic difference.

As a way of figuring out the positions in the direction of optical axis where the maximum values of the respective MTF characteristic curves are obtained, for example, the four ways (1) through (4) below can be adopted. Further, other ways may be possible.

(1) By interpolating the data, the maximum value of each of the MTFs is figured out, and a Z coordinate where the maximum value is obtained is determined as the image point.
(2) In each of the MTF curves, two points near the maximum point with the maximum point in-between are picked up, and the tangents at the two points are figured out. Then, a Z coordinate of the intersection of the tangents is determined as the image point.
(3) In each of the MTF curves, two points near the maximum point where the same MTF value is obtained are picked up, and the midpoint of the two points is determined as the image point.
(4) With regard to each of the MTFs, a Z coordinate where the maximum value of the measured data is obtained is determined as the image point.

The evaluation is represented by measurement at the green light modulator 37. Since the evaluation is performed with respect to only one color, the evaluating device 10 is simple, and it takes only a short time for the measurement. Not only the measurement at the green light modulator 37 but also measurements at the other modulators 35 and 36 may be performed (which will be described as an evaluating device and an evaluating method according to a second embodiment). In this case, the accuracy of the reflecting surfaces "f", "g", "i" and "j", and unevenness in the refractive index become apparent.

In the specific example above, the designed astigmatic difference is -5 $\mu$m. In the input/output separation prism unit 21, the maximum value of the Y-direction MTF is designed to be 87.9%, and in the color separation/composition prism unit 25, the maximum value of the X-direction MTF is designed to be 92.5%. The average of these values is 89.6%. As a specific example, actually measured values of the prism unit 20A are shown in Fig. 4.

The main factors of deterioration of the prism unit in the performance are the existence of air gaps, the shapes of prism surfaces and variations in refractive index. In order to evaluate the deterioration in the performance caused by these factors, it is preferred that an MTF and an astigmatic difference of the green light which crosses all the air gaps of the prism unit are figured out. As long as the astigmatic difference of the green light is measured, that of the blue light and that of the red light can be presumed from the designed values of the prism unit.

Fig. 5 shows designed astigmatic differences of the green light, the red light and the blue light in the above-described prism unit 20A. By the input/output separation prism unit 21, image points in the X direction of all the colors are in the reference position. Image points in the Y direction of all the colors are in a position displaced from the reference position by -22 $\mu$m, that is, toward the light source by 22 $\mu$m. Thus, the astigmatic differences with regard to the green light, the red light and the blue light which are caused by the input/output separation prism unit 21 are equal to one another.

By the color separation/composition prism unit 25, image points in the Y direction of all the colors are in the reference position. Image points in the X direction of the green light and of the red light are in a position displaced from the reference position by -27 $\mu$m, while an image point in the X direction of the blue light is in the reference position. This is because there are no air gaps in the optical path of the blue light.

Accordingly, the astigmatic differences of the green light, the red light and the blue light which are caused by the entire prism unit 20A comprising the input/output prism unit 21 and the color separation/composition prism unit 25 are -5 $\mu$m, -5 $\mu$m and +22 $\mu$m, respectively. These values are based on the image point in the Y direction, and a positive value shows that the image point in the X direction is farther from the light source than the image point in the Y direction.

The evaluation of a prism unit is performed by labeling the prism unit into one of three classes with reference to the measured astigmatic difference and the calculated MTF maximum value. In the exemplary case above, if there is an error only in the input/output separation prism unit 21, when the measured astigmatic difference of the green light is a negative value (when regarding the green light, the image point in the X direction is closer to the light source than the image point in the Y direction), the performance of the green light and the performance of the red light will be low. On the other hand, when the measured astigmatic difference of the green light is a positive value, the performance of the blue light will be low. There is a case wherein a large astigmatic difference caused by the input/output separation prism unit 21 and a large astigmatic difference caused by the color separation/composition prism unit 25 are cancelled by each other. In this case, the MTF values of chart images are low. Considering the performance balance among green light, red light and blue light, if the measured astigmatic difference based on the image point in the Y direction is within a range from -15 μm to +10 μm and if the maximum value of the average MTF of the X-direction MTF(Z) and the Y-direction MTF(Z) is not less than 75% (the maximum value of the Y-direction MTF(Z) is not less than 70%, and the maximum value of the X-direction MTF (Z) is not less than 80%), the unit is evaluated to be the most desired.

If the measured astigmatic difference is within a range from -20 μm to +15 μm and if the maximum value of the average MTF is not less than 70% (the maximum value of the Y-direction MTF is not less than 65%, and the maximum value of the X-direction MTF is not less than 75%), the unit is evaluated to be desired.

Also, if the measured astigmatic difference is within a range from -25 μm m to +20 μm and if the maximum value of the average MTF is not less than 65% (the maximum value of the Y-direction MTF is not less than 60%, and the maximum value of the X-direction MTF is not less than 70%), the unit is evaluated to be practically usable.

Second Exemplary Prism Unit; See Fig. 6

Fig. 6 shows a second exemplary prism unit 20B. The second exemplary prism unit 20B is a combination of the input/output prism unit 21 and the color separation/composition prism unit 25, and the color separation/composition prism unit 25 further comprises another prism 29. Thus, the second exemplary prism unit 20B is of a six-piece type.

The prism 29 is provided to project a clearer image, and more specifically, the prism 29 permits the angle of the surface "g" to be designed smaller and consequently improves the color characteristic of the light reflected by the dichroic film 32. A surface "n" of the prism 29 and the surface "f" of the prism 26 are parallel to each other at a small distance from each other, and thereby an air gap 33c is formed in-between. Also, a surface "o" of the prism 29 and the surface "m" of the prism 28 are parallel to each other.

The second exemplary prism unit 20B is basically of the same structure as that of the first exemplary prism unit 20A except that the second exemplary prism unit 20B further comprises the prism 29, and a repetitious description is omitted. The differences of the second exemplary prism unit 20B from the first exemplary prism unit 20A are described below.

The dichroic film 32 for reflecting red light is formed on the surface "g" of the prism 26, and the dichroic film 31 for reflecting blue light is formed on the surface "j" of the prism 27. Therefore, the red light modulator 36 is located opposite the surface "h" of the prism 26, and the blue light modulator 35 is located opposite the surface "k" of the prism 27.

Further, the surface "f" of the prism 26 tilts from the optical axis so that the light reflected by the dichroic film 32 can be entirely reflected by the surface "f'. Also, the surface "o" of the prism 29 and the surface "m" of the prism 28 are parallel to each other.

Now, designed values of the prism unit 20B are shown as an example. The values are shown sequentially from the light source side. Regarding the input/output separation prism unit 21, the prism thickness is 34mm (17mm + 17mm in the Z direction), the air gap 24a between the surfaces "b" and "c" is 12.5 μm, and the normal lines of the air gap surfaces "b" and "c" are at an angle of 33 degrees to the optical axis. Regarding the color separation/composition prism unit 25, the prism thickness is 82mm (8mm + 14mm + 14mm + 46mm in the Z direction), the air gap 33a between the surfaces "g" and "i" is 25 μm, the air gap 33b between the surfaces "j" and "1" is 25 μ m, and the air gap 33c between the surfaces "n" and "f" is 25 μm. The normal lines of the air gap surfaces "g" and "i" are at an angle of 18 degrees to the optical axis, the normal lines of the air gap surfaces "j" and "1" are at an angle of 18 degrees to the optical axis, and the normal lines of the air gap surfaces "n" and "f" are at an angle of 18 degrees to the optical axis.

When the evaluating device 10 is used to evaluate the prism unit 20B in the performance, the way of evaluating the prism unit 20B is basically the same as that of evaluating the prism unit 20A. In this example also, the frequency of pixels (pixel pitch) of the light modulators is 13.7 μm, and the spatial frequency of the evaluation chart in the reduction side (on the image surface) is 901p/mm.

The evaluation is represented by measurement at the green light modulator 37. Since the evaluation is performed with respect to only one color, the evaluating device 10 is simple, and it takes only a short time for the measurement. Not only the measurement at the green light modulator 37 but also measurements at the other modulators 35 and 36 (which will be described as an evaluating device and an evaluating method according to a second embodiment) may be performed. In this case, the accuracy of the reflecting surfaces "f", "g", "i" and "j", and unevenness in the refractive index become apparent.

In the specific example of the second prism unit 20B, the designed astigmatic difference is 15 μ m. In the input/output separation prism unit 21, the maximum value of the Y-direction MTF(Z) is designed to be 67.7%, and in the color separation/composition prism unit 25, the maximum value of the X-direction MTF(Z) is designed to be 100%. The average of these values is 81.3%.

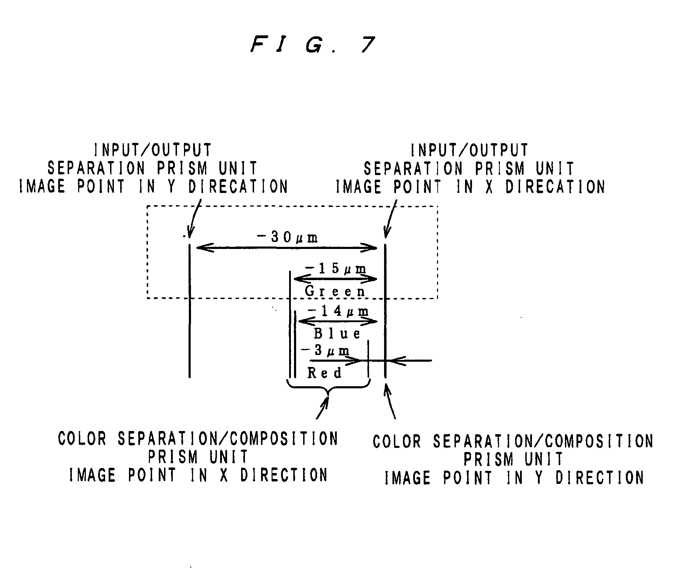

Fig. 7 shows the designed astigmatic differences of green light, blue light and red light occurring in the above-described prism unit 20B. The astigmatic differences of the green light, the blue light and the red light are designed to be +15 μm, +16 μm and +27 μm, respectively. These values are based on the image point in the Y direction, and a positive value shows that the image point in the X direction is farther from the light source than the image point in the Y direction.

The evaluation of a prism unit is performed by labeling the prism unit into one of three classes with reference to the measured astigmatic difference and the calculated MTF maximum value. In the second exemplary prism unit 20B, the designed astigmatic difference of green light is 15 $\mu$m. Considering the red light, if the measured astigmatic difference is within a range from -15 $\mu$m to +10 $\mu$m and if the maximum value of the average MTF is not less than 70% (the maximum value of the Y-direction MTF is not less than 60% in the Y direction, and the maximum value of the Y-direction MTF is not less than 90%), the unit is evaluated to be the most desired.

If the measured astigmatic difference is within a range from -20 $\mu$m to +15 $\mu$m and if the maximum value of the average MTF is not less than 65% (the maximum value of the Y-direction MTF is not less than 55%, and the maximum value of the X-direction MTF is not less than 85%), the unit is evaluated to be desired.

Also, if the measured astigmatic difference is within a range from -25 $\mu$m to +20 $\mu$m and if the maximum value of the average MTF is not less than 60% (the maximum value of the Y-direction MTF is not less than 50%, and the maximum value of the X-direction MTF is not less than 80%), the unit is evaluated to be practically usable.

Combination of Prism Units

The input/output separation prism unit 21 and the color separation/composition prism unit 25 can be separately subjected to the measurement of astigmatic difference. In evaluating each of the prism units 21 and 25 separately, the unit which is not subjected to the measurement is replaced with a master unit without an air gap.

It is possible to combine the prism units 21 and 25 such that drawbacks of the respective prism units 21 and 25 can be compensated for each other and such that the combined astigmatic difference can be within a specified range. Therefore, the prism units 21 and 25 can be manufactured at a high yield.

Table 1 below shows exemplary combinations of input/output separation prism units A, B and C, and color separation/composition prism units A, B and C, which were subjected to the measurement of astigmatic difference beforehand, in assembling a six-piece type prism unit 20B.

Table 1

| | | Input/Output Separation Prism Unit | | | | Color Separation/Composition Prism Unit | | | | Combined Astigmatic Difference | Results |
|---|---|---|---|---|---|---|---|---|---|---|---|
| | | | X-dir, | Y-dir, | Astigmatic Difference | | X-dir, | Y-dir, | Astigmatic Difference | | |
| Example 1 | A | 0 | -30 | 30 | A | -15 | 0 | -15 | 15 | OK |
| Example 2 | B | -2 | -24 | 22 | B | -16 | -3 | -13 | 9 | OK |
| Example 3 | C | -3 | -43 | 40 | C | -20 | -1 | -19 | 21 | OK |
| Example 4 | C | -3 | -43 | 40 | B | -16 | -3 | -13 | 27 | NG |
| (Units: $\mu$m) | | | | | | | | | | | |

In the first example, the input/output separation prism unit A with an astigmatic difference of 30 $\mu$m and a color separation/composition prism unit A with an astigmatic difference of -15 $\mu$m are combined, and the combined astigmatic difference is 15 $\mu$m. Similarly, in the second example, the combined astigmatic difference is 9 $\mu$m, and in the third example, the combined astigmatic difference is 21 $\mu$m. In the fourth example, the combined astigmatic difference is 27 $\mu$m, and this cannot be practically used.

Evaluating Device and Evaluating Method

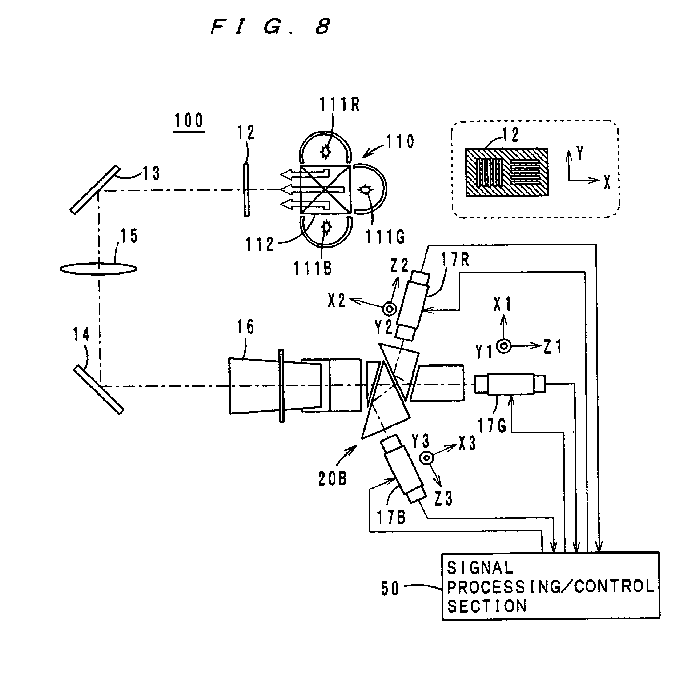

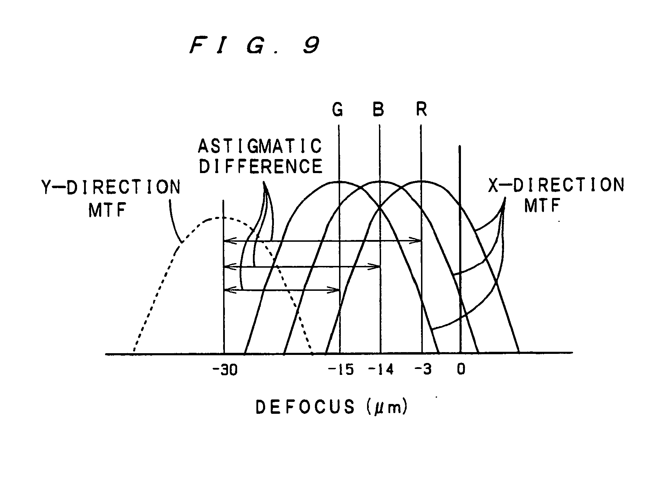

According to Second Embodiment; See Figs. 8 and 9

Next, referring to Fig. 8, a prism unit evaluating device according to a second embodiment is described. In the following, a case of evaluating a prism unit 20B of a six-piece type by use of the evaluating device will be described.

The evaluating device 100 comprises a light source unit 110, an evaluation chart 12, diverting mirrors 13 and 14, a collimator lens 15, a master lens 16, image pick-up units 17B, 17R and 17G, and a signal processing/control section 50 as shown in Fig. 1. The light source unit 110 comprises a blue light source 111B, a red light source 111R and a green light source 111G. Light beams emitted from these light sources are combined together by a beam splitter 112, and the combined beam irradiates the evaluation chart 12. Each of the image pick-up units 17B, 17R and 17G, like the image pick-up unit 17, comprises an objection lens and a two-dimensional image sensor (CCD) integrated together. The image pick-up units 17B, 17R and 17G are to observe images of the chart 12 formed by blue light, red light and green light, respectively, and are movable along the optical axes of the respective light beams. Thus, the evaluating device 100 picks up blue reduced images, red reduced images and green reduced images of the chart 12, and based on the contrasts of the respective images, astigmatic differences with regard to the respective three colors are figured out.

The way of evaluating the prism unit is basically the same as described in connection with the first embodiment. The blue light source 111B is a narrow-band light source which emits blue light within a band of 400nm to 500nm preferably with a peak wavelength of 450nm. The green light source 111G is a narrow-band light source which emits green light within a band of 500nm to 600nm preferably with a peak wavelength of 550nm. The red light source 111R is a narrow-band light source which emits red light within a band of 600nm to 700nm preferably with a peak wavelength of 650nm. It is preferred that light emitting diodes are used as the light sources 111B, 111G and 111R. First, by using a master prism unit and by using the evaluation chart 12 shown by Fig. 3, a reference position (a position where an image with the highest contrast is formed) and an instrumental constant (the contrast of an image formed on the reference position) are figured out. Thereafter, contrasts of images formed by use of the prism unit 20B are measured.

While moving along the respective optical axes, the image pick-up units 17B, 17R and 17G pick up images at positions at specified uniform intervals (at intervals of 1 $\mu$ m in the second embodiment), and contrasts of the images picked up at the respective positions are calculated from the expression (1). The contrasts obtained at the respective positions are standardized by the highest contrast (the instrumental constant) of the evaluating device 100, and the values obtained by the standardization are defined as an MTF(Z) of the prism unit 20B. The position where the maximum MTF value can be obtained is designated as an image point of the chart 12. The MTF(Z) of the green light, that of the blue light and that of the red light are calculated as follows.

$$\mathrm{MTF(Z)\ of\ Green} = \frac{\mathrm{Contrast\ of\ Images\ Picked\ up\ by\ Device\ 17G}}{\mathrm{Instrumental\ Constant}} \quad \cdots (2)$$

$$\mathrm{MTF(Z)\ of\ Blue} = \frac{\mathrm{Contrast\ of\ Images\ Picked\ up\ by\ Device\ 17B}}{\mathrm{Instrumental\ Constant}} \quad \cdots (3)$$

$$\mathrm{MTF(Z)\ of\ Red} = \frac{\mathrm{Contrast\ of\ Images\ Picked\ up\ by\ Device\ 17R}}{\mathrm{Instrumental\ Constant}} \quad \cdots (4)$$

The designed values of the prism unit 20B in this embodiment are as indicated by Table 2.

Table 2

| Difference | Astigmatic Difference ($\mu$m) | Maximum of X-dir. MTF (%) | Maximum of Y-dir. MTF (%) |
|---|---|---|---|
| Image Pick-up Device 17G | 15 | 100 | 67 |
| Image Pick-up Device 17B | 16 | 100 | 80 |
| Image Pick-up Device 17R | 27 | 100 | 73 |

Fig. 9 shows the designed astigmatic differences and MTFs of the green light, the red light and the blue light caused by the prism unit 20B. By the input/output separation prism unit 21, image points in the X direction of all the colors are in the reference position. Image points in the Y direction of all the colors are in a position dislocated from the reference position by -30 $\mu$m (by 30 $\mu$ m toward the light source). Thus, the astigmatic differences with regard to the green light, the red light and the blue light which are caused by the input/output separation prism unit 21 are equal to one another.

By the color separation/composition prism unit 25, image points in the Y direction of all the colors are in the reference position. An image point in the X direction of the green light is in a position displaced from the reference

position by -15 $\mu$ m m (by 15 $\mu$ m toward the light source). An image point in the X direction of the red light is in a position displaced from the reference position by -14 $\mu$ m (by 14 $\mu$ m toward the light source). An image point in the X direction of the blue light is in a position displaced from the reference position by -3 $\mu$ m (by 3 $\mu$ m toward the light source). Accordingly, the astigmatic differences of the green light, the blue light and the red light which are totally caused by the prism unit 20B comprising the input/output prism unit 21 and the color separation/composition prism unit 25 are +15 $\mu$m, +16 $\mu$m and +27 $\mu$m, respectively. These values are based on the image point in the Y direction, and a positive value shows that the image point in the X direction is farther from the light source than the image point in the Y direction).

The evaluation of a prism unit is performed by labeling the prism unit into one of two classes with reference to the measured astigmatic differences and the calculated MTF maximum values. Table 3 below shows a unit which is evaluated to be the most desired, and Table 4 below shows a unit which is evaluated to be usable.

Table 3

| THE MOST DESIRED | | | |
|---|---|---|---|
| | Astigmatic Difference ($\mu$m) | Maximum of X-dir. MTF (%) | Maximum of Y-dir. MTF (%) |
| Image Pick-up Device 17G | 0~30 | 85~ | 60~ |
| Image Pick-up Device 17B | 1~30 | 85~ | 70~ |
| Image Pick-up Device 17R | 12~30 | 85~ | 65~ |

Table 4

| USABLE | | | |
|---|---|---|---|
| | Astigmatic Difference ($\mu$m) | Maximum of X-dir. MTF (%) | Maximum of Y-dir. MTF (%) |
| Image Pick-up Device 17G | 0~30 | 75~ | 50~ |
| Image Pick-up Device 17B | 1~31 | 75~ | 60~ |
| Image Pick-up Device 17R | 12~42 | 75~ | 55~ |

Next, Table 5 shows actually measured values of samples of the above-described prism unit 20B.

Table 5

| | | Astigmatic Difference ($\mu$m) | Maximum of X-dir. MTF (%) | Maximum of Y-dir. MTF (%) |
|---|---|---|---|---|
| SAMPLE 1 | Image Pick-up Device 11G | 5 | 99~ | 82~ |
| | image Pick-up Device 17B | 12 | 80~ | 67~ |
| | Image Pick-up Device 11R | 19 | 97~ | 85~ |
| SAMPLE 2 | Image Pick-up Device 17G | 17 | 98~ | 84~ |
| | Image Pick-up Device 11B | 26 | 81~ | 66~ |
| | Image Pick-up Device 17R | 34 | 99~ | 82~ |

(continued)

|  |  | Astigmatic Difference (μm) | Maximum of X-dir. MTF (%) | Maximum of Y-dir. MTF (%) |
|---|---|---|---|---|
| SAMPLE 3 | Image Pick-up Device 11G | 29 | 97~ | 75~ |
|  | Image Pick-up Device 17B | 45 | 76~ | 58~ |
|  | Image Pick-up Device 17R | 38 | 96~ | 77~ |
| SAMPLE 4 | Image Pick-up Device 11G | 23 | 98~ | 79~ |
|  | Image Pick-up Device 11B | 35 | 78~ | 63~ |
|  | Image Pick-up Device 17R | 58 | 94~ | 77~ |

In Table 5, the sample 1 is a prism unit which can be evaluated to be the most desired, and it is evaluated that good images in all the colors can be obtained. The sample 2 is a prism unit which can be evaluated to be usable. In the sample 2, because the astigmatic difference of red light is over 30 μm, a projected red image degrades slightly; it is, however, within a tolerable range.

The sample 3 is a prism unit which is evaluated to be unusable. In the sample 3, the astigmatic difference of blue light is much over 30 μm, and a projected blue image degrades. Also, there is a large error in the astigmatic difference of blue light from the designed value, and the blue light may be poor in convergence. Thus, the sample 3 is evaluated as a unit in which focusing and convergence of blue light are poor.

The sample 4 is also a prism unit which is evaluated to be unusable. In the sample 4, the astigmatic difference of red light is much over 30 μm, and a projected red image degrades. Also, there is a large error in the astigmatic difference of red light from the designed value, and the red light may be poor in convergence. Thus, the sample 4 is evaluated as a unit in which focusing and convergence of red light and focusing of blue light are poor.

Basically, an error in the astigmatic difference within a range of ± 15 μm from the designed value is tolerable. When an error in the astigmatic difference is out of a range of ±30 μm, the focusing performance remarkably deteriorates. Also, when there is a large error in the astigmatic difference, the magnification in the X direction and the magnification in the Y direction may become different from each other due to aberrations of the prism. Therefore, when there is a large error in the astigmatic difference of one color, it may result in a problem that the convergence of the color does not match with the convergence of the other colors.

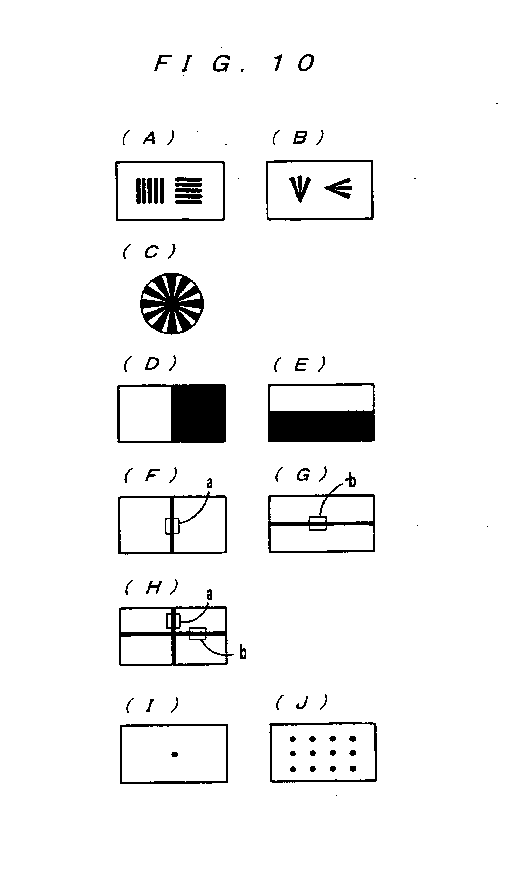

Various Charts; See Fig. 10

In Fig. 10, (A) through (J) show various charts used in the evaluating method according to the present invention. Fig. 10(A) is the above-described ladder chart, and Fig. 10(B) is a modified ladder chart. These ladder charts have specified frequencies in two orthogonal directions. As described in the first embodiment, the contrast of a chart image is calculated from the maximum value and the minimum value of its image signal. Chart images are picked up at positions at specified uniform intervals in a direction along the optical axis, and an astigmatic difference is figured out from a difference between two positions in the two directions where chart images with the highest contrasts in the respective directions can be obtained. The astigmatic difference, and the highest contrasts or the maximum values of MTFs in the respective directions are factors of evaluation.

Fig. 10(C) is a radial siemens chart and has a frequency in an arbitrary direction. The contrast of a chart image is calculated from the maximum value and the minimum value of its image signal. Chart images are picked up at positions at specified uniform intervals in a direction along the optical axis, and an astigmatic difference is figured out from a difference between two positions in specified two directions where the highest contrasts can be obtained. The astigmatic difference and the highest contrasts in the respective directions are factors of evaluation.

Fig. 10(D) is a vertical knife edge chart, and 10(E) is a horizontal knife edge chart. In image processing, the inclination of the edge between a bright portion and a dark portion is calculated. Chart images are picked up at positions at specified uniform intervals in a direction along the optical axis, and an astigmatic difference is figured out from a difference between a position where the maximum inclination of the edge of the chart (D) can be obtained and a position where the maximum inclination of the edge of the chart (E) can be obtained. The astigmatic difference and the maximum inclinations of the edges are factors of evaluation.

Fig. 10(F) is a vertical slit chart, and Fig. 10(G) is a horizontal slit chart. When these charts are used, degradation of chart images due to a prism unit is figured out by use of MTFs calculated mathematically. Then, from the calculated MTFs, an astigmatic difference is figured out. The process of figuring out the astigmatic difference in this case is described.

First, a master prism unit is set in the evaluating device 10. The image pick-up device 17 picks up images of the slit charts at positions at specified uniform intervals while moving along the optical axis. In areas a and b of the picked-up images, signals are integrated in the respective slit length directions, so that one-dimensional data in the respective slit width directions are obtained. The one-dimensional data are subjected to discrete Fourier transformation, whereby complex vector data are obtained. The length of the complex vector data (the absolute value of a complex number) is calculated, and the calculated length is standardized. This process is performed toward each of the picked up images, and thereby, an instrumental function of the evaluating device 10 is obtained. The instrumental function is a function between a position Z and a spatial frequency v. Next, the master prism unit is replaced with a prism unit to be evaluated, and the above-described process till the Fourier transformation is performed. The length of complex vector data obtained by the Fourier transformation is calculated, and the calculated length is standardized and divided by the instrumental function. In this way, a MTF(Z, $\nu$) of the prism unit can be obtained. An astigmatic difference is figured out, at a specified spatial frequency, from a difference between a position where the maximum MTF value of the horizontal chart is obtained and a position where the maximum MTF value of the vertical chart is obtained. The spatial frequency is preferably one to four times the Nyquist frequency determined by the pixel frequency of the light modulator. The astigmatic difference and the maximum MTF value at a specified frequency are factors of evaluation.

Fig. 10(H) is a cross chart with a horizontal slit and a vertical slit. In areas a and b, the same process as in the case of using the horizontal slit chart and the vertical slit chart is performed, and MTFs are calculated. Chart images are picked up at positions at specified uniform intervals in a direction along the optical axis, and an astigmatic difference is figured out from a difference between a position where the maximum MTF value in the horizontal direction is obtained and a position where the maximum MTF value in the vertical direction is obtained. The astigmatic difference and the maximum MTF values at a specified spatial frequency are factors of evaluation.

Fig. 10(I) is a pinhole chart with one pinhole, and Fig. 10(J) is a pinhole chart with a plural number of pinholes arranged in a matrix. The pinholes may be circular or polygonal. When the chart with a plural number of pinholes is used, the measured value can be stabilized by integration (averaging) of the pinhole portions. Images of either of the pinhole charts are subjected to two-dimensional Fourier transformation, and from the resultant values and the instrumental function, an MTF(Z) of the prism unit can be obtained. Instead of performing the two-dimensional Fourier transformation toward the pinhole images, one-dimensional Fourier transformation may be performed toward one-dimensional data in the X direction and that in the Y direction. Chart images are picked up at positions at specified uniform intervals in a direction along the optical axis, and an astigmatic difference is figured out, at a specified spatial frequency, from a difference between two positions where the maximum MTF values in two orthogonal directions are obtained. The astigmatic difference and the maximum MTF values at a specified spatial frequency are factors of evaluation.

Measurement of Astigmatic Difference

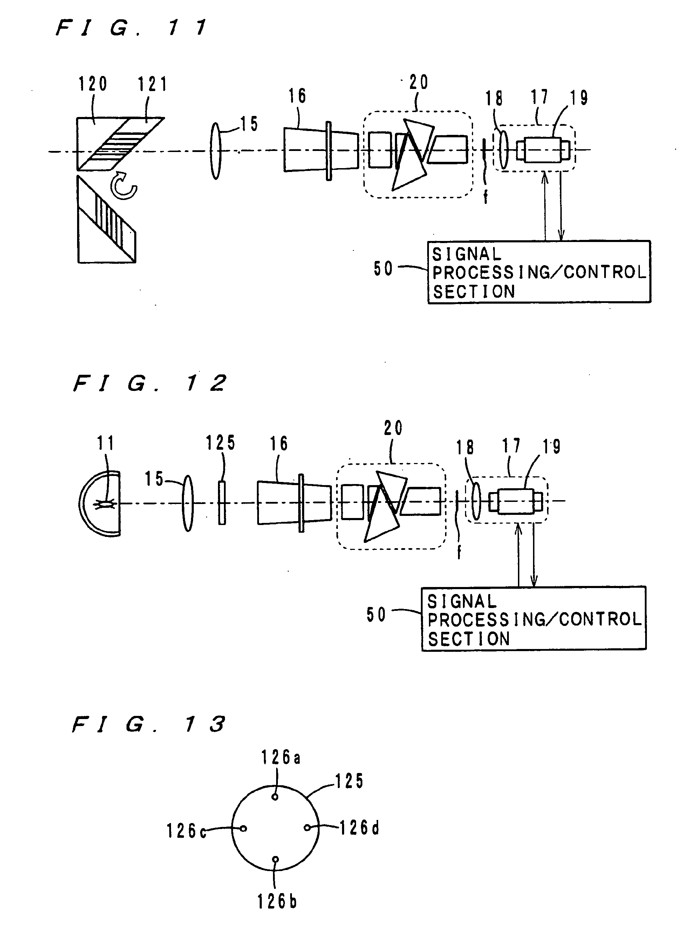

by Use of a Three-dimensional Chart; See Fig. 11

A three-dimensional chart may be used as an evaluation chart. As Fig. 11 shows, for example, a triangular member 120 with a parallel periodic pattern on an inclined surface 121 is used. While the triangular member 120 is rotating around the optical axis by 180 degrees, a two-dimensional image sensor (CCD) 19 picks up images of the pattern. As long as the pattern is such a thing that brings data of defocus in the direction of optical axis, the necessity of moving the image sensor 19 along the optical axis can be eliminated, and the time for measurement can be shortened.

Also, by rotating the triangular member 120 on the optical axis, the image points in the X direction and in the Y direction can be detected. Alternatively, on the surface 121, both an X-direction pattern and a Y-direction pattern may be formed, and in this case, the contrasts in both the X direction and the Y direction can be detected at one time, which further shortens the time for measurement. The surface 121 may be fine stairs.

Measurement of Astigmatic Difference by Use of a Zone Plate;

See Figs. 12-14

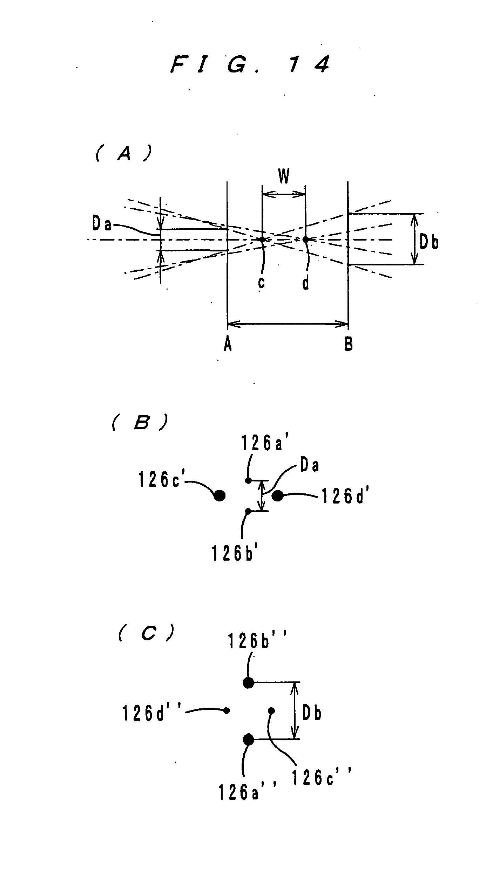

As Fig. 13 shows, a zone plate 125 with pinholes 126a-126d made therein at regular angular intervals of 90 degrees is inserted between the collimator lens 15 and the master lens 16, and at least two images are picked up by the image sensor 19. Then, as Fig. 14 shows, an astigmatic difference is measured as a distance W between an intersection c of the respective optical paths from the pinholes 126a and 126b and an intersection d of the respective optical paths from the pinholes 126c and 126d.

More specifically, when two images are picked up at positions A and B respectively, these images are as shown by Figs. 14(B) and 14(C). Further, Fig. 14(A) is an illustration for convenience wherein illustrations of two optical paths are combined together. In the respective images, four defocused images 126a' through 126'd and 126a" through 126d" of the four pinholes are seen. From the image picked up at the position A, a distance Da between the center of the pinhole image 126a' and the center of the pinhole image 126b' is calculated, and from the image picked up at the position B, a distance Db between the center of the pinhole image 126a" and the center of the pinhole image 126b" is calculated. The positions A and B are known, and from the relationship among the optical paths illustrated by Fig. 14(A), the intersection c of the optical path from the pinhole 126a and the optical path from the pinhole 126b can be figured out. In the same way, the intersection d of the optical path from the pinhole 12c and the optical path from the pinhole 126d can be figured out.

By using the zone plate 125, the degrees of convergences (the widths of a bundle of rays at converged points) of a plural number of bundles of rays can be detected, and these are also used for evaluation. Further, it is not necessary to move the image sensor 19 along the optical axis, and the time for measurement can be shortened.

Other Embodiments

Prism unit evaluation methods, prism unit evaluation devices and prism unit production methods according to the preferred embodiments of the present invention have been described above. It is to be noted that various changes and modifications are possible within the scope of the present invention.

In the embodiments above, the image pick-up unit 17 is moved along the optical axis. However, instead of the image pick-up unit 17, the master lens 16 may be moved along the optical axis. Also, images of the chart 12 may be picked up directly by the two-dimensional image sensor 19 not via the objection lens 18. In the embodiments above, an optical performance of each of the prism units 20, 21 and 25 is measured at one point. However, measurements at a plural number of points within an image forming area may be performed by use of abaxial rays. Thereby, with regard to each of the prisms, unevenness in the performance within an effective area can be detected.

In the embodiments above, an MTF(Z) is figured out based on contrasts of images of the ladder chart shown by Fig. 10(A). However, the image data of the ladder chart may be subjected to one-dimensional Fourier transformation or two-dimensional Fourier transformation, so that an MTF(Z, $\nu$) can be obtained. Also, in order to transform chart image data into a frequency space, Fourier transformation is performed in the embodiments above. However, other transformation methods can be adopted.

As the image pick-up unit, not only the CCD image sensor but also a line sensor, a detector with a surface detector and a slit scanner and any other sensor can be used as long as the sensor can measure light distribution.

INDUSTRIAL APPLICABILITY

As described above, the present invention is applicable to a method and a device for evaluating a prism unit to be used for a projector, and a production method of the prism unit, and the invention is particularly excellent in a point that an astigmatic difference caused by a prism unit can be measured with the prism unit itself.

**Claims**

1.  A method for producing a prism unit (20) that is suited to be used for a projection device comprising a projecting optical system for magnifying and projecting a light beam modulated by a light modulating element,
    wherein the prism unit (20) comprises a color separation/composition prism unit (25) with an air gap (33a, 33b) formed between air gap surfaces (g, i, j, 1) tilting against an optical axis (Z), said color separation/composition prism unit (25) separating a white light beam into a first color beam, a second color beam and a third color beam, composing reflected beams of the separated color beams into a composite beam and emitting the composite beam,
    the separation/composition prism unit (25) comprising:

    a first prism (26) having a first surface (f) which transmits the white light beam incident thereto, a second surface (g) with a reflection film (31) for reflecting the first color beam and a third surface (h) which transmits the first color beam emergent therefrom and which receives and transmits a reflected beam of the first color beam which has exited therefrom;
    a second prism (27) having a fourth surface (i) which transmits the second color beam and the third color beam incident thereto, a fifth surface (j) with a reflection film (32) for reflecting the second color beam and a sixth surface (k) which transmits the second color beam emergent therefrom and which receives and transmits a reflected beam of the second color beam which has exited therefrom; and

a third prism (28) having a seventh surface (1) which transmits the third color beam incident thereto and an eighth surface (m) which transmits the third color beam emergent therefrom and which receives and transmits a reflected beam of the third color beam which has exited therefrom;

wherein, the second surface (g) and the fourth surface (i) are first air gap surfaces (g, i) forming a first air gap (33a) in-between, and the fifth surface (j) and the seventh surface (1) are second air gap surfaces (j, 1) forming a second air gap (33b) in-between;

wherein, a plane which is orthogonal to the first air gap surfaces (g, i) and which includes the optical axis (Z) is parallel to a plane which is orthogonal to the second air gap surfaces (j, 1) and which includes the optical axis (Z);

wherein the method comprises an evaluation step for determining each product to be non-defective or defective by reducing and imaging a chart (12) with a master lens (16) via the prism unit (20) so as to form reduced images of the chart (12), each of which has a pattern in a first direction, and to form reduced images of the chart (12), each of which has a pattern in a second direction different from the first direction, calculating astigmatic differences of the three color beams based on image points of reduced images of the chart (12) and determining the product to be non-defective or defective based on the calculated astigmatic differences.

2. A method according to claim 1,

wherein in the evaluating step, a performance of the prism unit (20) is evaluated based on an astigmatic difference between an image point in a first direction which is orthogonal to a plane formed by the optical axis and normal lines of the first air gap surfaces (g, i) and the second air gap surfaces (j, 1) crossing the optical axis (Z) and an image point in a second direction which is orthogonal to the first direction and the optical axis (Z).

3. A method according to claim 2, wherein the color separation/composition prism unit (25) further comprises a fourth prism (22) which is located opposite the first surface of the first prism such that an air gap (24b) is formed between the fourth prism (22) and the first surface (f).

4. A method according to one of the claims 1 to 3, wherein the prism unit further comprises an input/output separation prism unit (21) for separating an illuminating light beam and a projecting light beam from each other , and wherein the input/output separation prism unit (21) comprises a third air gap (24a) tilting against an optical axis (Z).

5. A method according to one of the claims 1 to 4, wherein the chart includes a first chart having a pattern in the first direction and a second chart having a pattern in the second direction.

6. A method according to claim 5, wherein in the evaluating step:

data of reduced images of the first chart and data of reduced images of the second chart formed by the optical system are collected with an image pick-up unit (17) while a position of the optical system and a position of the image pick-up unit (17) in a direction of the optical axis (Z) are changed in relative to each other; and image points of the three color beams in the first direction and image points of the three color beams in the second direction are figured out based on spatial frequency data in the first direction transformed from the data of the reduced images of the first chart and spatial frequency data in the second direction transformed from the data of the reduced images of the second chart, and differences between the image points in the first direction and the image points in the second direction of the respective color beams are measured as the astigmatic differences.

7. A method according to claim 5, wherein in the evaluating step, a performance of the prism unit (20) is evaluated based on MTFs of reduced images of the first chart and MTFs of reduced images of the second chart.

8. A method according to claim 5, wherein the first chart has a frequency in the first direction, and the second chart has a frequency in the second direction.

9. A method according to claim 5, wherein the first chart and the second chart have such frequencies that reduced images of the first chart on the image points and reduced images of the second chart on the image points have frequencies from one to four times a Nyquist frequency determined by a pixel frequency of the light modulating element.

**10.** A method according to claim 5, wherein the image points of the first chart in the direction of the optical axis and the image points of the second chart in the direction of the optical axis are figured out based on contrasts of reduced images of the first chart and contrasts of reduced images of the second chart.

**11.** A device for evaluating a prism unit (20B) comprising a color separation/composition prism unit (25) with an air gap (33a, 33b) formed between air gap surfaces (g, i, j, 1) tilting against an optical axis (Z), said color separation/composition prism unit (25) separating a white light beam into a first color beam, a second color beam and a third color beam, to compose reflected beams of the separated color beams into a composite beam and to emit the composite beam,

the separation/composition prism unit (25) comprising:

a first prism (26) having a first surface (f) which transmits the white light beam incident thereto, a second surface (g) with a reflection film (31) for reflecting the first color beam and a third surface (h) which transmits the first color beam emergent therefrom and which receives and transmits a reflected beam of the first color beam which has exited therefrom;
a second prism (27) having a fourth surface (i) which transmits the second color beam and the third color beam incident thereto, a fifth surface (j) with a reflection film (32) for reflecting the second color beam and a sixth surface (k) which transmits the second color beam emergent therefrom and which receives and transmits a reflected beam of the second color beam which has exited therefrom; and
a third prism (28) having a seventh surface (1) which transmits the third color beam incident thereto and an eighth surface (m) which transmits the third color beam emergent therefrom and which receives and transmits a reflected beam of the third color beam which has exited therefrom;

wherein, the second surface (g) and the fourth surface (i) are first air gap surfaces (g, i) forming a first air gap (33a) in-between, and the fifth surface (j) and the seventh surface (1) are second air gap surfaces (j, 1) forming a second air gap (33b) in-between;
wherein, a plane which is orthogonal to the first air gap surfaces (g, i) and which includes the optical axis (Z) is parallel to a plane which is orthogonal to the second air gap surfaces (j, 1) and which includes the optical axis (Z); said device comprising:
a light source (110);
an evaluation chart (12);
an optical system (13, 14, 15, 16) for reducing and projecting a light beam which is emitted from the light source (110) and which passes through the evaluation chart (12) onto the prism unit (20B) so as to form reduced images of the evaluation chart (12), each of which has a pattern in a first direction, and to form reduced images of the evaluation chart (12), each of which has a pattern in a second direction different from the first direction;
a plural number of image pick-up units (17R, 17G, 17 B) for detecting images formed by the respective color beams which passed through the prism unit (20B); and
a mechanism for moving the optical system and the image pick-up units (17R, 17G, 17B) relative to each other along respective optical axes (Z2, Zl, Z3) of the color beams.

**12.** A device according to claim 11, wherein the prism unit (20) further comprises an input/output separation prism unit (25) for separating a light beam entering into the color separation/composition prism unit (25) and the composite beam emitted from the separation/composition prism unit (25) from each other.

**13.** A device according to claim 11 or 12, wherein each of the image pick-up units (17R, 17G, 17B) comprises an objection lens (18) and a light distribution detector (19).

**14.** A device according to claim 11, 12 or 13, wherein the evaluation chart (12) comprises a first chart with a frequency in a first direction which is orthogonal to a plane formed by the optical axis and normal lines of the air gap surfaces crossing the optical axis, and a second chart with a frequency in a second direction which is orthogonal to the first direction and the optical axis.

**Patentansprüche**

**1.** Verfahren zur Fertigung einer Prismen-Einheit (20), die dazu geeignet ist für ein Projektionsinstrument benutzt zu werden, das ein optisches Projektionssystem zur Magnifikation und Projektion eines Lichtstrahls aufweist, der durch ein Licht-modulierendes Element moduliert ist,

wobei die Prismen Einheit (20) eine Prismen-Einheit (25) zur Farbtrennung/Farbzusammenfügung aufweist, mit einem Luftspalt (33a, 33b), der zwischen Luftspaltoberflächen (g, i, j, 1) gebildet wird, die gegen eine optische Achse (Z) verkippt sind, wobei die Prismen-Einheit (25) zur Farbtrennung/Farbzusammenfügung einen weißem Lichtstrahl in einen ersten Farbstrahl, einen zweiten Farbstrahl und einen dritten Farbstrahl trennt, und reflektierte Strahlen der getrennten Farbstrahlen zu einem zusammengesetzten Strahl zusammensetzt und den zusammengesetzten Strahl emittiert,
wobei die Prismen-Einheit (25) zur
Farbtrennung/Farbzusammenfügung aufweist:

ein erstes Prisma (26) mit einer ersten Oberfläche (f), die den darauf auftreffenden weißen Lichtstrahl transmittiert, einer zweiten Oberfläche (g) mit einem reflektierenden Film (31), um den ersten Farbstrahl zu reflektieren, und einer dritten Oberfläche (h), die den davon ausgehenden ersten Farbstrahl transmittiert und die einen davon ausgetretenen, reflektierten Strahl des ersten Farbstrahls auffängt und transmittiert;
ein zweites Prisma (27) mit einer vierten Oberfläche (i), die die darauf auftreffenden zweiten und dritten Farbstrahlen transmittiert, einer fünften Oberfläche (j) mit einem reflektierenden Film (32), um den zweiten Farbstrahl zu reflektieren, und einer sechsten Oberfläche (k), die den davon ausgehenden zweiten Farbstrahl transmittiert und die einen davon ausgetretenen, reflektierten Strahl des zweiten Farbstrahls auffängt und transmittiert; und
ein drittes Prisma (28) mit einer siebten Oberfläche (1), die den darauf auftreffenden dritten Farbstrahl transmittiert, und einer achten Oberfläche (m), die den davon ausgehenden dritten Farbstrahl transmittiert und die einen davon ausgetretenen, reflektierten Strahl des dritten Farbstrahls auffängt und transmittiert;

wobei die zweite Oberfläche (g) und die vierte Oberfläche (i) erste Luftspaltoberflächen (g, i) sind, die dazwischen einen ersten Luftspalt (33a) bilden, und die fünfte Oberfläche (j) und die siebte Oberfläche (1) zweite Luftspaltoberflächen (j, 1) sind, die dazwischen einen zweiten Luftspalt (33b) bilden;
wobei eine Ebene, die zu den ersten Luftspaltoberflächen (g, i) orthogonal ist und die die optische Achse (Z) einschließt, parallel zu einer Ebene ist, die orthogonal zu den zweiten Luftspaltoberflächen (j, 1) ist und die die optische Achse (Z) einschließt;
wobei das Verfahren einen Beurteilungsschritt aufweist, um für jedes Produkt festzustellen, ob es nichtfehlerhaft oder fehlerhaft ist, der darin besteht, eine Grafik (12) mit einer Hauptlinse (16) durch die Prismen-Einheit (20) zu verkleinern und abzubilden, um so verkleinerte Bilder der Grafik (12) zu bilden, wobei jedes ein Muster entlang einer ersten Richtung aufweist, und um verkleinerte Bilder der Grafik (12) zu bilden, wobei jedes ein Muster entlang einer zweiten Richtung aufweist, die sich von der ersten Richtung unterscheidet, die astigmatischen Differenzen der drei Farbstrahlen basierend auf den Bildpunkten der verkleinerten Bilder der Grafik (12) zu berechnen, und basierend auf den berechneten astigmatischen Differenzen festzustellen, ob das Produkt nichtfehlerhaft oder fehlerhaft ist.

2. Verfahren nach Anspruch 1,
wobei eine Leistung der Prismen-Einheit (20) in dem Beurteilungsschritt basierend auf einer astigmatischen Differenz zwischen einem Bildpunkt in einer ersten Richtung und einem Bildpunkt in einer zweiten Richtung beurteilt wird, wobei die erste Richtung orthogonal zu einer Ebene ist, die von der optischen Achse und die optische Achse (Z) schneidenden Normalen der ersten Luftspaltoberflächen (g, i) und der zweiten Luftspaltoberflächen (j, 1) gebildet wird, und die zweite Richtung orthogonal zur ersten Richtung und zur optischen Achse (Z) ist.

3. Verfahren nach Anspruch 2, wobei die Prismen-Einheit (25) zur Farbtrennung/Farbzusammenfügung weiterhin ein viertes Prisma (22) aufweist, das der ersten Oberfläche des ersten Prismas gegenüber liegt, so dass zwischen dem vierten Prisma (22) und der ersten Oberfläche (f) ein Luftspalt (24b) gebildet wird.

4. Verfahren nach einem der Ansprüche 1 bis 3, wobei die Prismen-Einheit weiterhin eine Prismen-Einheit (21) zur Trennung von Eingang und Ausgang aufweist, um einen beleuchtenden Lichtstrahl und einen projizierenden Lichtstrahl voneinander zu trennen, und
wobei die Prismen-Einheit zur Trennung von Eingang und Ausgang einen dritten Luftspalt (24a) aufweist, der gegen eine optische Achse (Z) verkippt ist.

5. Verfahren nach einem der Ansprüche 1 bis 4, wobei die Grafik eine erste Grafik mit einem Muster in die erste Richtung und eine zweite Grafik mit einem Muster in die zweite Richtung aufweist.

6. Verfahren nach Anspruch 5, wobei im Beurteilungsschritt
Daten von verkleinerten Bildern der ersten Grafik und Daten von verkleinerten Bildern der zweiten Grafik, die durch das optische System gebildet werden, mit einer Bildaufnahmeeinheit (17) gesammelt werden, während eine Position des optischen Systems und eine Position der Bildaufnahmeeinheit (17) in Richtung der optischen Achse (Z) relativ zueinander geändert werden; und

Bildpunkte der drei Farbstrahlen in der ersten Richtung und Bildpunkte der drei Farbstrahlen in der zweiten Richtung, mittels Raumfrequenzdaten in der ersten Richtung, die aus den Daten der verkleinerten Bilder der ersten Grafik berechnet werden, und Raumfrequenzdaten in der zweiten Richtung, die aus den Daten der verkleinerten Bilder der zweiten Grafik berechnet werden, aufgefunden werden, und Unterschiede zwischen den Bildpunkten in der ersten Richtung und den Bildpunkten in der zweiten Richtung der jeweiligen Farbstrahlen als die astigmatische Differenzen gemessen werden.

7. Verfahren nach Anspruch 5, wobei eine Leistung der Prismen-Einheit (20) im Beurteilungsschritt mittels MTFs der verkleinerten Bilder der ersten Grafik und MTFs der verkleinerten Bilder der zweiten Grafik beurteilt wird.

8. Verfahren nach Anspruch 5, wobei die erste Grafik eine Frequenz in die erste Richtung und die zweite Grafik eine Frequenz in die zweite Richtung aufweist.

9. Verfahren nach Anspruch 5, wobei die erste Grafik und die zweite Grafik solche Frequenzen aufweisen, dass verkleinerte Bilder der ersten Grafik in den Bildpunkten und verkleinerte Bilder der zweiten Grafik in den Bildpunkten Frequenzen aufweisen, die dem ein- bis vierfachen einer Nyquist-Frequenz entsprechen, die durch eine Pixel-Frequenz des Licht-modulierenden Elements bestimmt ist.

10. Verfahren nach Anspruch 5, wobei die Bildpunkte der ersten Grafik in Richtung der optischen Achse und die Bildpunkte der zweiten Grafik in Richtung der optischen Achse mittels Kontraste von verkleinerten Bildern der ersten Grafik und Kontraste von verkleinerten Bildern der zweiten Grafik aufgefunden werden.

11. Vorrichtung zur Beurteilung einer Prismen-Einheit (20B), die eine Prismen-Einheit (25) zur Farbtrennung/Farbzusammenfügung aufweist, mit einem Luftspalt (33a, 33b), der zwischen Luftspaltoberflächen (g, i, j, 1) gebildet wird, die gegen eine optische Achse (Z) verkippt sind, wobei die Prismen-Einheit (25) zur Farbtrennung/Farbzusammenfügung einen weißem Lichtstrahl in einen ersten Farbstrahl, einen zweiten Farbstrahl und einen dritten Farbstrahl trennt, um reflektierte Strahlen der getrennten Farbstrahlen zu einen zusammengesetzten Strahl zusammenzusetzen und den zusammengesetzten Strahl zu emittieren,
wobei die Prismen-Einheit (25) zur
Farbtrennung/Farbzusammenfügung aufweist:

ein erstes Prisma (26) mit einer ersten Oberfläche (f), die den darauf auftreffenden weißen Lichtstrahl transmittiert, einer zweiten Oberfläche (g) mit einem reflektierenden Film (31), um den ersten Farbstrahl zu reflektieren, und einer dritten Oberfläche (h), die den davon ausgehenden ersten Farbstrahl transmittiert und die einen davon ausgetretenen, reflektierten Strahl des ersten Farbstrahls auffängt und transmittiert;
ein zweites Prisma (27) mit einer vierten Oberfläche (i), die die darauf auftreffenden zweiten und dritten Farbstrahlen transmittiert, einer fünften Oberfläche (j) mit einem reflektierenden Film (32), um den zweiten Farbstrahl zu reflektieren, und einer sechsten Oberfläche (k), die den davon ausgehenden zweiten Farbstrahl transmittiert und die einen davon ausgetretenen, reflektierten Strahl des zweiten Farbstrahls auffängt und transmittiert; und
ein drittes Prisma (28) mit einer siebten Oberfläche (1), die den darauf auftreffenden dritten Farbstrahl transmittiert, und einer achten Oberfläche (m), die den davon ausgehenden dritten Farbstrahl transmittiert und die einen davon ausgetretenen, reflektierten Strahl des dritten Farbstrahls empfängt und transmittiert;
wobei die zweite Oberfläche (g) und die vierte Oberfläche (i) erste Luftspaltoberflächen (g, i) sind, die dazwischen einen ersten Luftspalt (33a) bilden, und die fünfte Oberfläche (j) und die siebte Oberfläche (1) zweite Luftspaltoberflächen (j, 1) sind, die dazwischen einen zweiten Luftspalt (33b) bilden;
wobei eine Ebene, die zu den ersten Luftspaltoberflächen (g, i) orthogonal ist und die die optische Achse (Z) einschließt, parallel zu einer Ebene ist, die orthogonal zu den zweiten Luftspaltoberflächen (j, 1) ist und die die optische Achse (Z) einschließt;

bei dem die Vorrichtung aufweist:

eine Lichtquelle (110);
eine Grafik (12) zur Beurteilung;
ein optisches System (13, 14, 15, 16) zur Verkleinerung und Projektion eines Lichtstrahls, der von der Lichtquelle (110) emittiert wird und der durch die Grafik (12) zur Beurteilung auf die Prismen-Einheit (20B) fällt, um verkleinerte Bilder der Grafik (12) zur Beurteilung zu generieren, wobei jedes ein Muster in eine erste Richtung aufweist, und um verkleinerte Bilder der Grafik (12) zur Beurteilung zu generieren, wobei jedes ein Muster in eine zweite Richtung aufweist, die sich von der ersten Richtung unterscheidet;

eine Mehrzahl an Bildaufnahmeeinheiten (17R, 17G, 17 B), um die Bilder der jeweiligen Farbstrahlen zu detektieren, die die Prismen-Einheit (20B) durchliefen, und

einen Mechanismus, um das optische System und die Bildaufnahmeeinheiten (17R, 17G, 17B) relativ zueinander entlang der jeweiligen optischen Achsen (Z2, Z1, Z3) der Farbstrahlen zu verschieben.

**12.** Vorrichtung nach Anspruch 11, wobei die Prismen-Einheit (20) weiterhin eine Prismen-Einheit (25) zur Trennung von Eingang und Ausgang aufweist, um einen Lichtstrahl, der in die Prismen-Einheit (25) zur Farbtrennung/Farbzusammenfügung eintritt, und den zusammengesetzten Lichtstrahl, der aus der Prismen-Einheit (25) zur Farbtrennung/Farbzusammenfügung austritt, voneinander zu trennen.

**13.** Vorrichtung nach Ansprüchen 11 oder 12, wobei jede der Bildaufnahmeeinheiten (17R, 17G, 17B) eine Beobachtungslinse (18) und einen Lichtverteilungsdetektor (19) aufweist.

**14.** Vorrichtung nach Ansprüchen 11, 12 oder 13, wobei die Grafik (12) zur Beurteilung aufweist: eine erste Grafik mit einer Frequenz entlang einer ersten Richtung, die orthogonal zu einer Ebene ist, die von der optischen Achse und die optische Achse schneidenden Normalen auf die Luftspaltoberflächen gebildet wird, und eine zweite Grafik mit einer Frequenz entlang einer zweite Richtung, die orthogonal zur ersten Richtung und zur optischen Achse ist.

## Revendications

**1.** Procédé pour produire une unité prismatique (20) qui est appropriée pour être utilisée dans un dispositif de projection comprenant un système optique de projection pour l'agrandissement et la projection d'un faisceau de lumière modulé par un élément de modulation de lumière,

dans lequel l'unité prismatique (20) comprend une unité prismatique de séparation / composition de couleurs (25) avec un espacement d'air (33a, 33b) formé entre des surfaces d'espacement d'air (g, i, j, 1) s'inclinant par rapport à un axe optique (Z), ladite unité prismatique de séparation / composition de couleurs (25) séparant un faisceau de lumière blanche en un premier faisceau de couleur, un deuxième faisceau de couleur et un troisième faisceau de couleur, composant des faisceaux réfléchis des faisceaux de couleur séparés en un faisceau composite et émettant le faisceau composite,

l'unité prismatique de séparation / composition (25) comprenant :

un premier prisme (26) ayant une première surface (f) qui transmet le faisceau de lumière blanche incident à cette dernière, une deuxième surface (g) avec un film de réflexion (31) pour réfléchir le premier faisceau de couleur et une troisième surface (h) qui émet le premier faisceau de couleur émergent de cette dernière et qui reçoit et émet un faisceau réfléchi du premier faisceau de couleur qui est sorti de cette dernière ;

un deuxième prisme (27) ayant une quatrième surface (i) qui émet le deuxième faisceau de couleur et le troisième faisceau de couleur incident à cette dernière, une cinquième surface (j) avec un film de réflexion (32) pour réfléchir le deuxième faisceau de couleur et une sixième surface (k) qui émet le deuxième faisceau de couleur émergent de cette dernière et qui reçoit et émet un faisceau réfléchi du deuxième faisceau de couleur qui est sorti de cette dernière ; et

un troisième prisme (28) ayant une septième surface (1) qui émet le troisième faisceau de couleur incident à cette dernière et une huitième surface (m) qui émet le troisième faisceau de couleur émergent de cette dernière et qui reçoit et émet un faisceau réfléchi du troisième faisceau de couleur qui est sorti de cette dernière ; i

dans lequel, la deuxième surface (g) et la quatrième surface (i) sont des premières surfaces d'espacement d'air (g, i) formant un premier espacement d'air (33a) entre elles, et la cinquième surface (j) et la septième surface (1) sont des secondes surfaces d'espacement d'air (j, 1) formant un deuxième espacement d'air (33b) entre elles ;

dans lequel, un plan qui est orthogonal aux premières surfaces d'espacement d'air (g, i) et qui inclut l'axe optique (Z) est parallèle à un plan qui est orthogonal aux secondes surfaces d'espacement d'air (j, 1) et qui inclut l'axe optique (Z) ;

dans lequel le procédé comprend une étape d'évaluation pour déterminer chaque produit comme étant non défectueux ou défectueux en réduisant et en imageant un diagramme (12) avec une lentille maître (16) via l'unité prismatique (20) de façon à former des images réduites du diagramme (12), chacune d'elles ayant un motif dans une première direction, et de façon à former des images réduites du diagramme (12), chacune d'elles ayant un motif dans une seconde direction différente de la première direction, en calculant des différences astigmates des trois faisceaux de couleur en se basant sur des points d'image d'images réduites du diagramme (12) et en déterminant le produit comme étant non défectueux ou défectueux en se basant sur les différences astigmates calculées.

2.  Procédé selon la revendication 1,
    dans lequel dans l'étape d'évaluation, une performance de l'unité prismatique (20) est évaluée en se basant sur une différence astigmate entre un point d'image dans une première direction qui est orthogonale à un plan formé par l'axe optique et des lignes normales des premières surfaces d'espacement d'air (g, i) et les secondes surfaces d'espacement d'air (j, 1) croisant l'axe optique (Z) et un point d'image dans une seconde direction qui est orthogonale à la première direction et à l'axe optique (Z).

3.  Procédé selon la revendication 2, dans lequel l'unité prismatique de séparation / composition de couleur (25) comprend en outre un quatrième prisme (22) qui est situé en face de la première surface du premier prisme de sorte qu'un espacement d'air (24b) est formé entre le quatrième prisme (22) et la première surface (f).

4.  Procédé selon l'une des revendications 1 à 3, dans lequel l'unité prismatique comprend en outre une unité prismatique de séparation d'entrée / sortie (21) pour séparer un faisceau de lumière d'éclairage et un faisceau de lumière de projection l'un de l'autre, et
    dans lequel l'unité prismatique de séparation d'entrée / sortie (21) comprend un troisième espacement d'air (24a) s'inclinant par rapport à un axe optique (Z).

5.  Procédé selon l'une des revendications 1 à 4, dans lequel le diagramme inclut un premier diagramme ayant un motif dans la première direction et un second diagramme ayant un motif dans la seconde direction.

6.  Procédé selon la revendication 5, dans lequel dans l'étape d'évaluation :

    des données d'images réduites du premier diagramme et des données d'images réduites du second diagramme formé par le système optique sont recueillies avec une unité de chargement d'image (17) tandis qu'une position du système optique et une position de l'unité de chargement d'image (17) dans une direction de l'axe optique (Z) sont changées l'une par rapport à l'autre ; et
    des points d'image des trois faisceaux de couleur dans la première direction et des points d'image des trois faisceaux de couleur dans la seconde direction sont calculés en se basant sur des données de fréquence spatiale dans la première direction transformées à partir des données des images réduites du premier diagramme et des données de fréquence spatiales dans-la seconde direction transformées à partir des données des images réduites du second diagramme, et des différences entre les points d'image dans la première direction et les points d'image dans la seconde direction des faisceaux de couleur respectifs sont mesurées en tant que différences astigmates.

7.  Procédé selon la revendication 5, dans lequel dans l'étape d'évaluation, une performance de l'unité prismatique (20) est évaluée en se basant sur des MTF d'images réduites du premier diagramme et des MTF d'images réduites du second diagramme.

8.  Procédé selon la revendication 5, dans lequel le premier diagramme a une fréquence dans la première direction et le second diagramme a une fréquence dans la seconde direction.

9.  Procédé selon la revendication 5, dans lequel le premier diagramme et le second diagramme ont de telles fréquences que des images réduites du premier diagramme sur les points d'image et des images réduites du second diagramme sur les points d'image ont des fréquences d'une à quatre fois une fréquence de Nyquist déterminée par une fréquence de pixel de l'élément de modulation de lumière.

10. Procédé selon la revendication 5, dans lequel les points d'image du premier diagramme dans la direction de l'axe optique et les points d'image du second diagramme dans la direction de l'axe optique sont calculés en se basant sur des contrastes d'images réduites du premier diagramme et des contrastes d'images réduites du second diagramme.

11. Dispositif pour évaluer une unité prismatique (20B) comprenant une unité prismatique de séparation / composition de couleur (25) avec un espacement d'air (33a, 33b) formé entre des surfaces d'espacement d'air (g, i, j, 1) s'inclinant contre un axe optique (Z), ladite unité prismatique de séparation / composition de couleur (25) séparant un faisceau de lumière blanche en un premier faisceau de couleur, un deuxième faisceau de couleur et un troisième faisceau de couleur, pour composer des faisceaux réfléchis des faisceaux de couleur séparés en un faisceau composite et pour émettre le faisceau composite,

l'unité prismatique de séparation / composition (25) comprenant :

un premier prisme (26) ayant une première surface (f) qui transmet le faisceau de lumière blanche incident à cette dernière, une deuxième surface (g) avec un film de réflexion (31) pour réfléchir le premier faisceau de couleur et une troisième surface (h) qui émet le premier faisceau de couleur émergent de cette dernière et qui reçoit et transmet un faisceau réfléchi du premier faisceau de couleur qui est sorti de cette dernière ;

un deuxième prisme (27) ayant une quatrième surface (i) qui émet le deuxième faisceau de couleur et le troisième faisceau de couleur incident à cette dernière, une cinquième surface (j) avec un film de réflexion (32) pour réfléchir le deuxième faisceau de couleur et une sixième surface (k) qui émet le deuxième faisceau de couleur émergent de cette dernière et qui reçoit et émet un faisceau réfléchi du deuxième faisceau de couleur qui est sorti de cette dernière ; et

un troisième prisme (28) ayant une septième surface (1) qui émet le troisième faisceau de couleur incident à cette dernière et une huitième surface (m) qui émet le troisième faisceau de couleur émergent de cette dernière et qui reçoit et émet un faisceau réfléchi du troisième faisceau de couleur qui est sorti de cette dernière ;

dans lequel, la deuxième surface (g) et la quatrième surface (i) sont des premières surfaces d'espacement d'air (g, i) formant un premier espacement d'air (33a) entre, et la cinquième surface (j) et la septième surface (1) sont des secondes surfaces d'espacement d'air (j, 1) formant un second espacement d'air (33b) entre elles ;

dans lequel, un plan qui est orthogonal aux premières surfaces d'espacement d'air (g, i) et qui inclut l'axe optique (Z) est parallèle à un plan qui est orthogonal aux secondes surfaces d'espacement d'air (j, 1) et qui inclut l'axe optique (Z) ; ledit dispositif comprenant :

une source de lumière (110) ;

un diagramme d'évaluation (12) ;

un système optique (13, 14, 15, 16) pour réduire et projeter un faisceau de lumière qui est émis à partir de la source de lumière (110) et qui passe par le diagramme d'évaluation (12) sur l'unité prismatique (20B) de façon à former des images réduites du diagramme d'évaluation (12), chacune d'elles ayant un motif dans une première direction, et de façon à former des images réduites du diagramme d'évaluation (12), chacune d'elles ayant un motif dans une seconde direction différente de la première direction ;

un nombre pluriel d'unités de chargement d'image (17R, 17G, 17B) pour détecter des images formées par les faisceaux de couleur respectifs qui sont passés par l'unité prismatique (20B) ; et

un mécanisme pour déplacer le système optique et les unités de chargement d'image (17R, 17G, 17B) les uns par rapport aux autres le long d'axes optiques respectifs (Z2, Z1, Z3) des faisceaux de couleur.

12. Dispositif selon la revendication 11, dans lequel l'unité prismatique (20) comprend en outre une unité prismatique de séparation d'entrée / sortie (25) pour séparer un faisceau de lumière entrant dans l'unité prismatique de séparation / composition de couleur (25) et le faisceau composite émis en provenance de l'unité prismatique de séparation / composition (25) l'un de l'autre.

13. Dispositif selon la revendication 11 ou 12, dans lequel chacune des unités de chargement d'image (17R, 17G, 17B) comprend une lentille de focalisation (18) et un détecteur de distribution de lumière (19).

14. Dispositif selon la revendication 11, 12 ou 13, dans lequel le diagramme d'évaluation (12) comprend un premier diagramme avec une fréquence dans une première direction qui est orthogonale à un plan formé par l'axe optique et des lignes normales des surfaces d'espacement d'air croisant l'axe optique, et un second diagramme avec une fréquence dans une seconde direction qui est orthogonale à la première direction et l'axe optique.

# F I G . 1

SIGNAL PROCESSING/CONTROL SECTION

# F I G . 2

( A )   <u>20A</u>

( B )

<u>20A</u>

WHITE
LIGHT

F I G . 3

( A )

( B )

( C )

SIGNAL
STRENGTH

SIGNAL STRENGTH

# F I G . 4

# F I G . 5

# F I G . 6

( A )

( B )

WHITE
LIGHT

*F I G . 7*

INPUT/OUTPUT
SEPARATION PRISM UNIT
IMAGE POINT IN Y DIRECATION

INPUT/OUTPUT
SEPARATION PRISM UNIT
IMAGE POINT IN X DIRECATION

$-30\mu\mathrm{m}$

$-15\mu\mathrm{m}$
Green

$-14\mu\mathrm{m}$
Blue

$-3\mu\mathrm{m}$
Red

COLOR SEPARATION/COMPOSITION
PRISM UNIT
IMAGE POINT IN X DIRECTION

COLOR SEPARATION/COMPOSITION
PRISM UNIT
IMAGE POINT IN Y DIRECTION

EP 1 821 092 B1

# F I G . 8

# F I G . 9

# FIG. 10

( A )    ( B )

( C )

( D )    ( E )

( F ) a    ( G ) b

( H ) a
b

( I )    ( J )

F I G . 1 1

120  121

16   ·20   18  17  19

15

f

50 ──  SIGNAL
PROCESSING/CONTROL
SECTION

F I G . 1 2

11   125  16   20   18  17  19

15

f

50 ──  SIGNAL
PROCESSING/CONTROL
SECTION

F I G . 1 3

126a
─125
126c ─        ─126d

126b

# FIG. 14

( A )

( B )

( C )

F I G . 1 5

**REFERENCES CITED IN THE DESCRIPTION**

**Patent documents cited in the description**

- JP 2003262918 A
- JP 2002049094 A
- US 20030048423 A1
- US 20040085518 A1
- US 6452627 B1
- JP 2000258725 A